(19) Europäisches Patentamt
European Patent Office
Office européen des brevets

(11) EP 3 914 432 B1

(12) EUROPEAN PATENT SPECIFICATION

(45) Date of publication and mention of the grant of the patent:
**13.08.2025 Bulletin 2025/33**

(21) Application number: **20744705.3**

(22) Date of filing: **24.01.2020**

(51) International Patent Classification (IPC):
***B29B 11/16*** *(2006.01)* ***B29C 44/20*** *(2006.01)*
***B29C 51/12*** *(2006.01)*

(52) Cooperative Patent Classification (CPC):
**B65D 25/14**

(86) International application number:
**PCT/US2020/014923**

(87) International publication number:
**WO 2020/154578 (30.07.2020 Gazette 2020/31)**

(54) **POLYOL FATTY ACID ESTER CARRIER COMPOSITIONS**

TRÄGERSYSTEME FÜR POLYOLFETTSÄUREESTER

COMPOSITIONS DE SUPPORT D'ESTER D'ACIDE GRAS DE POLYOL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.01.2019 US 201962797106 P**

(43) Date of publication of application:
**01.12.2021 Bulletin 2021/48**

(73) Proprietor: **Greentech Global Pte, Ltd.**
**06-00 Singapore 048616 (SG)**

(72) Inventors:
- **SPENDER, Jonathan**
  **New York, New York 10010 (US)**
- **BILODEAU, Michael Albert**
  **New York, New York 10010 (US)**
- **MIKAIL, Samuel**
  **New York, New York 10010 (US)**

(74) Representative: **Bohmann, Armin K.**
**Bohmann**
**Anwaltssozietät**
**Nymphenburger Straße 1**
**80335 München (DE)**

(56) References cited:
**EP-A1- 3 385 306** **WO-A1-2012/130611**
**CN-A- 106 432 911** **US-A1- 2015 284 911**
**US-A1- 2018 326 063**

- **ANONYMOUS: "Bagasse", 2009, pages 1 - 6, XP055727743, Retrieved from the Internet <URL:https://en.wikipedia.org/wiki/Bagasse> [retrieved on 20200326]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### FIELD OF THE INVENTION

The present invention relates generally to treating fiber-containing substrates, and more specifically to treating said substrates with particles comprising saccharide fatty acid esters (SFAE) in combination with polymers such as latexes, and optionally minerals, including compositions containing such a combination. In particular, the present invention is related to a method of producing a molded cellulose-containing article; a composition comprising sucrose fatty acid ester particles containing one or more cargo material, wherein said composition is preferably suitable for use in the method; an emulsion comprising the composition, wherein the emulsion is preferably suitable for use in the method; and an article of manufacture produced by the method.

### BACKGROUND INFORMATION

Conventionally, the raw materials for producing cellulose fiber-based molded products may include wheat, wheat straw, wood, sugar cane bagasse, phragmites communis and edge paper. The material is pulped by hydrodynamic pulping to form a mixture which may then be cured on a metal mold. Subsequently, it may be surface treated with water-soluble acrylic, latex, resin or coating agent containing EVA (Ethyl Vinyl Acetate).

In the past decade, such methods included (a) picking the nonpoisonous chaffy raw materials, including the straws, the grains, the waste residues and the starch rich plants; (b) washing the chaffy raw materials with water to remove the dusts, soil and contaminants; (c) drying by centrifugation; (d) grinding the chaffy raw materials into powder (e) mixing the powder with an additive premix and water evenly to form a mixture, the additive premix containing special edible gum, sulfate salt, hard acid, and a treatment agent, in which the special edible gum is composed of latex, pectin and protein gel and the treatment agent is composed of special edible gum, calcium chloride and alum; (f) thermal forming the mixture into a product; (g) stripping the product from the mold; and (h) drying (see, e.g., Taiwan Patent Publication No. 500746).

Recent methods include: (a) separately preparing a pulp, using a first auxiliary agent containing anionic substances (e.g., aluminum silicate and natural wax emulsion) and a second auxiliary agent containing non-ionic and cationic substances (e.g., fluorochemical series resin, polymer compound, aliphatic polyamine and alkyl acryl copolymer); (b) mixing the pulp and the first auxiliary agent with water uniformly to form a pulp premix; (c) mixing the second auxiliary agent with the pulp premix to form a pulp mixture; and (d) thermal forming of the pulp mixture to form the packing material (see, e.g., U.S. Publication No. 20050211405).

While the latter method is effective for producing water/oil resistance on fiber-based substrate/surfaces, more recently the use of fluorochemical has come under heavy scrutiny because of environmental and health concerns. Therefore, it is desired to use compositions and methods that can achieve barrier performance (e.g., water/oil resistance) for cellulose fiber-based molded substrates without the use of fluorochemicals.

WO 2012/130611 A1 is related to an edible oil-in-water emulsion composition, wherein the composition comprises sucrose fatty acid esters.

EP 3 385 306 A1 is related to composite particles including cellulose, an inorganic compound and hydroxypropyl cellulose.

### SUMMARY OF THE INVENTION

The problem underlying the present invention is solved by the subject matter of the attached independent claims; preferred embodiments may be taken from the attached dependent claims.

More specifically, the problem underlying the present invention is solved in a first aspect by a method of producing a molded cellulose-containing article comprising:

adding an emulsion or slurry to a cellulose fiber furnish, wherein said emulsion or slurry comprises one or more sucrose fatty acid esters and one or more carrier particles;

draining the furnish through one or more meshes or screens;

thermal forming the mixture into a product in a mold; and

stripping the product from the mold,

wherein a carrier of the one or more carrier particles comprises an uncooked starch, preferably an uncooked starch particle,

wherein said aqueous emulsion or slurry is mixed with the cellulose fiber slurry at a concentration of between about 5% to about 50% of the total dry weight, prior to wet forming, and

wherein said product exhibits water, oil, and/or grease resistance compared to a cellulose product not treated with said emulsion or slurry.

In an embodiment of the first aspect, the carrier of the one or more carrier particles comprises an uncooked corn starch, rice starch, wheat starch, potato starch, tapioca starch granule, or a combination thereof; preferably an uncooked starch particle, more preferably an uncooked corn starch particle.

In an embodiment of the first aspect, the product is a bowl, plate, a bottle, a pouch, a packaging container or insert.

In an embodiment of the first aspect, a further carrier of the one or more carrier particles is selected from the group consisting of a sucrose fatty acid ester, a polymer, a solid latex polymer bead, a hollow polymer shell, a resin bead, a pigment particle, and combinations thereof.

In an embodiment of the first aspect, the pigment particle is selected from the group consisting of calcium carbonate, titanium dioxide, kaolin clay, silica, silicate, talc, mica, and combinations thereof.

In an embodiment of the first aspect, the particles further comprise uncooked corn starch, rice starch, wheat starch, potato starch, or tapioca starch granule, oat hull, rice hull, ground nut shell, or combination thereof.

In an embodiment of the first aspect, said particles are coated with one or more sucrose esters and dispersed into an aqueous emulsion or slurry.

In an embodiment of the first aspect, said aqueous emulsion or slurry is mixed with the cellulose fiber slurry at a concentration of between about 5% to about 50% of the total dry weight, prior to wet forming, preferably at a concentration of between 5% and 40% of the total dry weight, prior to wet forming, and more preferably at a concentration of between about 5 % and 40% of the total dry weight, prior to wet forming.

In an embodiment of the first aspect, the carrier is a polymer, and wherein the polymer exhibits a low glass transition temperature.

In an embodiment of the first aspect, the polymer is latex.

In an embodiment of the first aspect, the uncooked starch is uncooked corn starch.

In an embodiment of the first aspect, the product exhibits reduced stickiness.

More specifically, the problem underlying the present invention is solved in a second aspect by a composition, preferably suitable for use in a method according to the first aspect, including any embodiment thereof, wherein the composition comprises sucrose fatty acid ester particles containing one or more cargo materials, wherein a cargo material of the one or more cargo materials comprises a latex.

In an embodiment of the second aspect, the latex comprises a solid latex polymer bead.

In an embodiment of the second aspect, said one or more cargo materials further comprises a cargo material selected from the group consisting of a polymer, a resin bead, calcium carbonate, titanium dioxide, kaolin clay, silica, silicate, talc, mica and combinations thereof.

In an embodiment of the second aspect, the composition further comprises thymol, lecithin, alkyl glucosides and combinations thereof.

In an embodiment of the second aspect, the particles are micelles, microcapsules or nanocapsules.

In an embodiment of the second aspect, the sucrose fatty acid ester is a mono- or diester.

In an embodiment of the second aspect, the sucrose fatty acid ester comprises all saturated fatty acids or is a mixture of saturated and unsaturated fatty acids.

In an embodiment of the second aspect, the fatty acid ester particles comprise one or more sucrose fatty acid esters.

More specifically, the problem underlying the present invention is solved in a third aspect by an emulsion, preferably suitable for use in a method according to the first aspect, including any embodiment thereof, wherein the emulsion comprises the composition according to the second aspect, including any embodiment thereof.

More specifically, the problem underlying the present invention is solved in a fourth aspect by an article of manufacture produced by the method according to the first aspect, including any embodiment thereof.

The present invention as defined in the claims relates to methods of treating molded surfaces with carrier particles that confer, *inter alia*, water resistance and/or oil/grease resistance to such treated surfaces. The methods provide combining at least one saccharide fatty acid esters (SFAE) with polymers such as latexes in particle form, and applying such particles on substrates including cellulose-based materials. Such a composition may also include inorganic minerals/pigments.

In embodiments of the present invention as defined in the claims, a method of producing a cellulose-containing article is disclosed including adding an emulsion or slurry to a cellulose fiber furnish, where the emulsion or slurry comprises one or more sucrose fatty acid esters and one or more carrier particles; draining the furnish through one or more meshes or screens; thermal forming the mixture into a product in a mold; and stripping the product from the mold, where the

product exhibits water, oil, and grease resistance compared to a cellulose product not treated with said emulsion or slurry. In an embodiment, the cellulose fiber furnish includes fibers from wheat, wheat straw, wood, sugar cane bagasse, phragmites communis, edge paper and combinations thereof.

In one embodiment of the present invention as defined in the claims, the product is a bowl, plate, a bottle, a pouch, a packaging container or insert. In another embodiment, the carrier includes a sucrose fatty acid ester, a polymer, a solid latex polymer bead, a hollow polymer shell, a resin bead, a pigment particle, and combinations thereof. In a related embodiment, the pigment particle includes calcium carbonate, titanium dioxide, kaolin clay, silica, silicate, talc, mica and combinations thereof.

In one embodiment of the present invention as defined in the claims, the particles further comprise uncooked corn starch, rice starch, wheat starch, potato starch, or tapioca starch granule, oat hull, rice hull, ground nut shell, or combination thereof. In another embodiment, the particles are coated with one or more sucrose esters and dispersed into an aqueous emulsion or slurry.

In one embodiment of the present invention as defined in the claims, the aqueous emulsion or slurry is mixed with the cellulose fiber slurry at a concentration of between about 5% to about 50% of the total dry weight, prior to wet forming.

In another embodiment of the present invention as defined in the claims, the carrier is a polymer, and the polymer exhibits a low glass transition temperature. In a related embodiment, the polymer is latex. In a further related embodiment, the product exhibits reduced stickiness.

In one embodiment of the second aspect, the cargo molecules are selected based on the property to be modified. In a related embodiment, such property may be tuneable (e.g., provide a range in 3M kit value and/or range in water contact angle). In further related embodiment, different properties may be exhibited by different portions of products made using the composition by selecting various cargo molecules and/or means of making said particles (e.g., varying heating temperatures, heating time, heating-cooling cycles, mixing methods, buffers, surfactants, emulsifiers, continuous/discontinuous phase compositions, pH, emulsion method, and the like).

In one embodiment of the second aspect, the one or more cargo materials include a polymer, a solid latex polymer bead, a resin bead, calcium carbonate, titanium dioxide, kaolin clay, silica, silicate, talc, mica and combinations thereof.

## BRIEF DESCRIPTION OF THE DRAWINGS

FIG. 1 shows a scanning electron micrograph (SEM) of untreated, medium porosity Whatman Filter Paper (58x magnification).

FIG. 2 shows an SEM of untreated, medium porosity Whatman Filter Paper (1070x magnification).

FIG. 3 shows a side-by-side comparison of SEMs of paper made from recycled pulp before (left) and after (right) coating with microfibrillated cellulose (MFC) (27x magnification).

FIG. 4 shows a side-by-side comparison of SEMs of paper made from recycled pulp before (left) and after (right) coating with MFC (98x magnification).

FIG. 5 shows water penetration in paper treated with various coating formulations: polyvinyl alcohol (PvOH), diamonds; SEFOSE® + PvOH at 1:1 (v/v), squares; Ethylex (starch), triangles; SEFOSE® + PvOH at 3:1 (v/v), crosses.

FIG. 6 shows water beading on paper treated with an aqueous composition comprising 2 sucrose fatty acid esters having different HLB values and precipitated calcium carbonate.

## DETAILED DESCRIPTION OF THE INVENTION

Before the present composition, methods, and methodologies are described, it is to be understood that the invention as defined in the claims is not limited to particular compositions, methods, and experimental conditions described, as such compositions, methods, and conditions may vary. It is also to be understood that the terminology used herein is for purposes of describing particular embodiments only, and is not intended to be limiting, since the scope of the invention will be limited only in the claims.

As used in this specification and the appended claims, the singular forms "a", "an", and "the" include plural references unless the context clearly dictates otherwise. Thus, for example, references to "a saccharide fatty acid ester" includes one or more saccharide fatty acid esters, and/or compositions of the type described herein which will become

apparent to those persons skilled in the art upon reading this description and so forth.

Unless defined otherwise, all technical and scientific terms used herein have the same meaning as commonly understood by one of ordinary skill in the art to which this invention as defined in the claims belongs. Any methods and materials similar or equivalent to those described herein may be used in the practice or testing of the invention as defined in the claims, as it will be understood that modifications and variations are encompassed within the spirit and scope of the invention as defined in the claims.

As used herein, "about," "approximately," "substantially" and "significantly" will be understood by a person of ordinary skill in the art and will vary in some extent depending on the context in which they are used. If there are uses of the term which are not clear to persons of ordinary skill in the art given the context in which it is used, "about" and "approximately" will mean plus or minus <10% of particular term and "substantially" and "significantly" will mean plus or minus >10% of the particular term. "Comprising" and "consisting essentially of" have their customary meaning in the art.

Barrier coatings on surfaces usually function to prevent externals (e.g., liquids/gases) from passing through surfaces, or to reduce egress of such externals. Various materials that make up the coating may improve the performance of a particular base component. For example, latex is a very good film former, which can serve as a major component of a base coat to seal a porous base sheet, to which a top coat may be added to improve performance of the base coat. In such a construction of base and top coat, latex functions as a physical barrier, where polymers, for example, may be added to improve performance metrics such as Cobb values.

While not a polymer, *per se*, as taught herein SFAEs have been found aid in modifying Cobb values of substrates containing barrier coatings comprising latexes. While not being bound by theory, latex films may leave pores for water/water vapor to travel into the interstices of a porous substrate such as paper: the SFAEs may fill the pores, and because the SFAEs possess hydrophobic surfaces, water/water vapor is repelled from the pores, resulting in improved Cobb values. The combination performs well and allows for low Cobb values without compromising product quality, including providing an increased level of performance.

Also, as inorganic pigments may be added, a mixture of inorganic particles, latex and SFAEs offers the improvement of fine tuning of the various properties of a sheet. For example, such sheets may contain wood fiber, and include a bioplastic fiber along with combinations to waterproof/grease proof such a sheet. The combinations as envisaged would allow the use cheaper, more common materials, such as mechanical or recycled pulp to be a larger percentage of the mass of the sheet. In such a case, the addition of, for example, a calcium carbonate-latex-SFAE mixture would offer the improvement of allowing the control of the density of the sheet.

In embodiments of the present invention as defined in the claims, the method to produce a cellulose-containing article that has water, and/or oil and grease resistance includes adding an emulsion or slurry containing one or more sucrose fatty acid esters and one or more carrier particles to the cellulose fiber furnish and draining the furnish through one or more meshes or screens, whereby the wet molded cellulose fiber article would then be heated to drive off the remaining water and produce a finished article, such as bowl, plate, or packaging container or insert.

In a related embodiment of the invention as defined in the claims, the carrier particle may include, but is not limited to, a solid latex polymer bead, a hollow polymer shell, a resin bead, or a pigment particle such as a calcium carbonate, titanium dioxide, kaolin clay, silica or silicate, talc, or mica. In a further related embodiment, the particle may also be an organic particle such as an uncooked corn starch, rice starch, wheat starch, potato starch, or tapioca starch granule, oat hull, rice hull, ground nut shell, or other similar particle or combination thereof.

In embodiments of the invention as defined in the claims, the particle may be coated with one or more sucrose fatty acid esters and dispersed into an aqueous emulsion or slurry. In a related embodiment, the aqueous emulsion or slurry may then be mixed with the cellulose fiber slurry, at a concentration of between about 5% to about 10%, about 10% to about 20%, about 20% to about 30%, about 30% to about 40%, or about 40% to about 50% of the total dry weight, prior to wet forming. While not being bound by theory, the sucrose fatty acid ester overcomes the sticking problem encountered with the use of many polymeric particles, such as latex. This is particularly true for the case of polymers, or latexes, that have a low glass transition temperature.

In a related embodiment, the size and dispersion of the coated particles may be chosen by the skilled artisan so that they can migrate toward the surface of the article during the forming process. While not being bound by theory, this increases the concentration of the coated particles on the surface compared to the bulk of the article, improving the cost benefit of adding the coated particles. In a further related embodiment, the increased concentration of the coated particles allows for film forming and melting of the sucrose fatty acid esters and/or polymers at the surface of the article during the heating and drying process, and also allows for catalysts or chemical reactions with optional additives to be initiated to bond with the cellulose substrates, crosslink the constituents, or otherwise chemically modify the surface of the article to develop water, oil, and/or grease resistance.

In a further related embodiment, the release properties of the one or more sucrose fatty acid esters permit the use of potentially sticky or tacky additives in this composition, overcoming shortfalls of the prior art while contributing to the barrier properties of the article.

The use of this invention as defined in the claims eliminates, or greatly reduces, the need to coat, dip, or spray

additional materials on the surface of the article to impart water, oil, and/or grease resistance.

In embodiments of the invention as defined in the claims, the one or more sucrose fatty acid esters can form micelles/microcapsules/nanocapsules, and may be used as carriers themselves, which carriers may be combined with thymol, lecithin, alkyl glucosides to encapsulate a solid latex polymer bead, a resin bead, or a pigment particle such as a calcium carbonate, titanium dioxide, kaolin clay, silica or silicate, talc, or mica. Further, variation in particle size may be effected by using longer aliphatic groups (i.e., micelles/microcapsules/nanocapsules become more compact with longer acyl groups). Further, for higher DS, bilayer structures similar cell membranes may be formed.

In embodiments of the invention as defined in the claims, the present invention shows that by treating cellulose fiber-based substrates with carrier combinations of the present invention, *supra*, the resulting material, *inter alia*, can be made strongly oil/grease resistant, hydrophobic and to exhibit low Cobb values. In addition, these saccharide fatty acid esters, for example, once removed by bacterial enzymes, are easily digested as such. The derivatized surface displays a great deal of heat resistance, being able to withstand temperatures as high as 250°C and may be more impermeant to gases than the base substrate underneath. The material is therefore an ideal solution to the problem of derivatizing the hydrophilic surface of cellulose, in any embodiment in which cellulose materials may be employed.

Advantages of the products and methods of the invention as defined in the claims include that the coating composition is made from renewable agricultural resources - saccharides and vegetable oils; has a low toxicity profile and suitable for food contact; can be tuned to reduce the coefficient of friction of the paper/paperboard surface (i.e., does not make the paper too slippery for downstream processing or end use), even at high levels of water resistance; may or may not be used with special emulsification equipment or emulsification agents; and is compatible with traditional paper recycling programs: i.e., poses no adverse impact on recycling operations, like polyethylene, polylactic acid, or wax coated papers do. Further, the extended use of inorganics, such as PCC/GCC, take advantage of the inherent property of the filler (e.g., less abrasive).

Other advantages for the coat formulations include:

- relatively easy to make;
- base coatings run well at high speeds at target coat weights;
- no blocking of the rolls;
- no problems with cleanup;
- coatings may be run between 60-75% solids with viscosities that can be adjusted to the low side for blade coating: 220-350 cps;
- high solids point to lower dryer costs, including that SFAEs did not affect viscosity negatively;
- eliminates, or greatly reduces, the need to coat, dip, or spray additional materials on the surface of the article to impart water, oil, and/or grease resistance.

As used herein, "biobased" means a material intentionally made from substances derived from living (or once-living) organisms. In a related embodiment, material containing at least about 50% of such substances is considered biobased.

As used herein, "bind", including grammatical variations thereof, means to cohere or cause to cohere essentially as a single mass.

As used herein, "carrier" means a substance used to support or convey another substance such as a polymer, pigment, or catalyst.

As used herein, "cargo" means substance or material delivered by a carrier.

As used herein, "furnish" means the predetermined mixture of fibrous and non-fibrous materials like fillers, sizing, and dyes in a water suspension from which paper is made.

As used herein, "cellulosic" means natural, synthetic or semisynthetic materials that can be molded or extruded into objects (e.g., bags, sheets) or films or filaments, which may be used for making such objects or films or filaments, that is structurally and functionally similar to cellulose, e.g., coatings and adhesives (e.g., carboxymethylcellulose). In another example, cellulose, a complex carbohydrate $(C_6H_{10}O_5)_n$ that is composed of glucose units, which forms the main constituent of the cell wall in most plants, is cellulosic.

As used here, "capsule" means a substance or material that encloses another substance or material (e.g., closed receptacle). In a related embodiment, micro- and nano- refer to the unit micrometer and nanometer scales.

As used herein, "coating weight" is the weight of a material (wet or dry) applied to a substrate. It is expressed in pounds per specified ream or grams per square meter.

As used herein, "Cobb value" means the water absorption (in weight of water per unit area) of a sample. The procedure for determining the "Cobb value" is done in compliance with TAPPI standard 441-om. The Cobb value is calculated by subtracting the initial weight of the sample from the final weight of the sample and then dividing by the area of the sample covered by the water. The reported value represents grams of water absorbed per square meter of paper.

As used herein, "compostable" means these solid products are biodegradable into the soil.

As used herein, "edge wicking" means the sorption of water in a paper structure at the outside limit of said structure by one or more mechanisms including, but not limited to, capillary penetration in the pores between fibers, diffusion through fibers and bonds, and surface diffusion on the fibers. In a related embodiment of the invention as defined in the claims, the saccharide fatty acid ester containing coating as described herein prevents edge wicking in treated products. A similar problem may exist with grease/oil entering creases that may be present in paper or paper products. Such a "grease creasing effect" may be defined as the sorption of grease in a paper structure that is created by folding, pressing or crushing said paper structure.

As used herein, "effect", including grammatical variations thereof, means to impart a particular property to a specific material.

As used herein, "hydrophobe" means a substance that does not attract water. For example, waxes, rosins, resins, saccharide fatty acid esters, diketenes, shellacs, vinyl acetates, PLA, PEI, oils, fats, lipids, other water repellant chemicals or combinations thereof are hydrophobes.

As used herein, "hydrophobicity" means the property of being water-repellent, tending to repel and not absorb water.

As used herein, "lipid resistance" or "lipophobicity" means the property of being lipid-repellent, tending to repel and not absorb lipids, grease, fats and the like. In a related embodiment, the grease resistance may be measured by a "3M KIT" test or a TAPPI T559 Kit test.

As used herein, "micelle", including grammatical variations thereof, means an aggregate of molecules in a colloidal solution.

As used herein, "emulsion" means a mixture of two or more liquids that are normally immiscible (unmixable or unblendable). In a related embodiment, an emulsion may be a water in oil (w/o), oil in water (o/w) or double emulsion (e.g., w/o/w).

As used herein, "cellulose-containing material" or "cellulose-based material" means a composition which consists essentially of cellulose. For example, such material may include, but is not limited to, paper, paper sheets, paperboard, paper pulp, a carton for food storage, parchment paper, cake board, butcher paper, release paper/liner, a bag for food storage, a shopping bag, a shipping bag, bacon board, insulating material, tea bags, containers for coffee or tea, a compost bag, eating utensil, container for holding hot or cold beverages, cup, a lid, plate, a bottle for carbonated liquid storage, gift cards, a bottle for non-carbonated liquid storage, film for wrapping food, a garbage disposal container, a food handling implement, a fabric fibre (e.g., cotton or cotton blends), a water storage and conveying implement, alcoholic or non-alcoholic drinks, an outer casing or screen for electronic goods, an internal or external piece of furniture, a curtain and upholstery.

As used herein, "release paper" means a paper sheet used to prevent a sticky surface from prematurely adhering to an adhesive or a mastic. In one embodiment, the coatings can be used to replace or reduce the use of silicon or other coatings to produce a material having a low surface energy. Determining the surface energy may be readily achieved by measuring contact angle (e.g., Optical Tensiometer and/or High Pressure Chamber; Dyne Testing, Staffordshire, United Kingdom) or by use of Surface Energy Test Pens or Inks (see, e.g., Dyne Testing, Staffordshire, United Kingdom).

As used herein "releasable" with reference to the SFAE means that the SFAE coating, once applied, may be removed from the cellulose-based material (e.g., removeable by manipulating physical properties). As used herein "non-releasable" with reference to the SFAE means that the SFAE coating, once applied, is substantially irreversibly bound to the cellulose-based material (e.g., removable by chemical means).

As used herein, "fluffy" means an airy, solid material having the appearance of raw cotton or a Styrofoam peanut. In embodiments of the invention as defined in the claims, the fluffy material may be made from nanocellulose fibers (e.g., MFC) cellulose nanocrystals, and/or cellulose filaments and saccharide fatty acid esters, where the resulting fibers or filaments or crystals are hydrophobic (and dispersible), and may be used in composites (e.g., concretes, plastics and the like).

As used herein, "fibers in solution" or "pulp" means a lignocellulosic fibrous material prepared by chemically or mechanically separating cellulose fibers from wood, fiber crops or waste paper. In a related embodiment of the invention as defined in the claims, where cellulose fibers are treated by the methods of the invention as defined in the claims, the cellulose fibers themselves contain bound saccharide fatty acid esters as isolated entities, and where the bound cellulose fibers have separate and distinct properties from free fibers (e.g., pulp- or cellulose fiber- or nanocellulose or microfibrillated cellulose-saccharide fatty acid ester bound material would not form hydrogen bonds between fibers as readily as unbound fibers).

As used herein, "repulpable" means to make a paper or paperboard product suitable for crushing into a soft, shapeless mass for reuse in the production of paper or paperboard.

As used herein, "tunable", including grammatical variations thereof, means to adjust or adapt a process to achieve a particular result.

As used herein, "water contact angle" means the angle measured through a liquid, where a liquid/vapor interface meets a solid surface. It quantifies the wettability of the solid surface by the liquid. The contact angle is a reflection of how

strongly the liquid and solid molecules interact with each other, relative to how strongly each interacts with its own kind. On many highly hydrophilic surfaces, water droplets will exhibit contact angles of 0° to 30°. Generally, if the water contact angle is larger than 90°, the solid surface is considered hydrophobic. Water contact angle may be readily obtained using an Optical Tensiometer (see, e.g., Dyne Testing, Staffordshire, United Kingdom).

As used herein, "water vapour permeability" means breathability or a textile's ability to transfer moisture. There are at least two different measurement methods. One, the MVTR Test (Moisture Vapour Transmission Rate) in accordance with ISO 15496, describes the water vapor permeability (WVP) of a fabric and therefore the degree of perspiration transport to the outside air. The measurements determine how many grams of moisture (water vapor) pass through a square meter of fabric in 24 hours (the higher the level, the higher the breathability).

In one embodiment of the invention as defined in the claims, TAPPI T 530 Hercules size test (i.e., size test for paper by ink resistance) may be used to determine water resistance. Ink resistance by the Hercules method is best classified as a direct measurement test for the degree of penetration. Others classify it as a rate of penetration test. There is no one best test for "measuring sizing." Test selection depends on end use and mill control needs. This method is especially suitable for use as a mill control sizing test to accurately detect changes in sizing level. It offers the sensitivity of the ink float test while providing reproducible results, shorter test times, and automatic end point determination.

Sizing, as measured by resistance to permeation through or absorption into paper of aqueous liquids, is an important characteristic of many papers. Typical of these are bag, containerboard, butcher's wrap, writing, and some printing grades.

This method may be used to monitor paper or board production for specific end uses provided acceptable correlation has been established between test values and the paper's end use performance. Due to the nature of the test and the penetrant, it will not necessarily correlate sufficiently to be applicable to all end use requirements. This method measures sizing by rate of penetration. Other methods measure sizing by surface contact, surface penetration, or absorption. Size tests are selected based on the ability to simulate the means of water contact or absorption in end use. This method can also be used to optimize size chemical usage costs.

As used herein, "oxygen permeability" means the degree to which a polymer allows the passage of a gas or fluid. Oxygen permeability (Dk) of a material is a function of the diffusivity (D) (i.e., the speed at which oxygen molecules traverse the material) and the solubility (k) (or the amount of oxygen molecules absorbed, per volume, in the material). Values of oxygen permeability (Dk) typically fall within the range 10-150 x $10^{-11}$ ($cm^2$ ml $O_2$)/(s ml mmHg). A semi-logarithmic relationship has been demonstrated between hydrogel water content and oxygen permeability (Unit: Barrer unit). The International Organization for Standardization (ISO) has specified permeability using the SI unit hectopascal (hPa) for pressure. Hence Dk = $10^{-11}$ ($cm^2$ ml $O_2$) /(s ml hPa). The Barrer unit can be converted to hPa unit by multiplying it by the constant 0.75.

As used herein "biodegradable", including grammatical variations thereof, means capable of being broken down especially into innocuous products by the action of living things (e.g., by microorganisms).

As used herein, "recyclable", including grammatical variations thereof, means a material that is treatable or that can be processed (with used and/or waste items) so as to make said material suitable for reuse.

As used herein "latex" means a stable dispersion (emulsion) of polymer microparticles in an aqueous medium. It is found in nature, but synthetic latexes can be made by polymerizing a monomer such as styrene that has been emulsified with surfactants. Latex as found in nature is a milky fluid found in 10% of all flowering plants (angiosperms). It is a complex emulsion consisting of proteins, alkaloids, starches, sugars, oils, tannins, resins, and gums that coagulate on exposure to air.

As used herein, "filler" means finely divided white mineral (or pigments) added to paper making furnishes to improve the optical and physical properties of the sheet. The particles serve to fill in the spaces and crevices between the fibers, thus, producing a sheet with increased brightness, opacity, smoothness, gloss, and printability, but generally, lower bonding and tear strength. Common paper making fillers include clay (kaolin, bentonite), calcium carbonate (both GCC and PCC), talc (magnesium silicate), and titanium dioxide.

As used herein, "stickiness" means the quality or tendency of a material to stay attached to a surface that comes in contact with said material. May be measured by ASTM D4501.

As used herein, "Gurley second" or "Gurley number" is a unit describing the number of seconds required for 100 cubic centimeters (deciliter) of air to pass through 1.0 square inch of a given material at a pressure differential of 4.88 inches of water (0.176 psi) (ISO 5636-5:2003)(Porosity). In addition, for stiffness, "Gurley number" is a unit for a piece of vertically held material measuring the force required to deflect said material a given amount (1 milligram of force). Such values may be measured on a Gurley Precision Instruments' device (Troy, New York).

HLB-The hydrophilic-lipophilic balance of a surfactant is a measure of the degree to which it is hydrophilic or lipophilic, determined by calculating values for the different regions of the molecule.

Griffin's method for non-ionic surfactants as described in 1954 works as follows:

$$HLB = 20 * M_h/M$$

where $M_h$ is the molecular mass of the hydrophilic portion of the molecule, and M is the molecular mass of the whole molecule, giving a result on a scale of 0 to 20. An HLB value of 0 corresponds to a completely lipophilic/hydrophobic molecule, and a value of 20 corresponds to a completely hydrophilic/lipophobic molecule.

The HLB value can be used to predict the surfactant properties of a molecule:

< 10 : Lipid-soluble (water-insoluble)

> 10 : Water-soluble (lipid-insoluble)

1.5 to 3: anti-foaming agent

3 to 6: W/O (water in oil) emulsifier

7 to 9: wetting and spreading agent

13 to 15: detergent

12 to 16: O/W (oil in water) emulsifier

15 to 18: solubiliser or hydrotrope

In some embodiments of the invention as defined in the claims, the HLB values for the saccharide fatty acid esters (or composition comprising said ester) may be in the lower range. In other embodiments, the HLB values for the saccharide fatty acid esters (or composition comprising said ester) may be in the middle to higher ranges. In embodiments of the invention as defined in the claims, mixing SFAEs with different HLB values may be used.

As used herein, "SEFOSE®" denotes a sucrose fatty acid ester made from soybean oil (soyate) which is commercially available from Procter & Gamble Chemicals (Cincinnati, OH) under the trade name SEFOSE 1618U (see sucrose polysoyate below), which contains one or more fatty acids that are unsaturated. As used herein, "OLEAN®" denotes a sucrose fatty acid ester which is available from Procter & Gamble Chemicals having the formula $C_{n+12}H_{2n+22}O_{13}$, where all fatty acids are saturated. In addition, SFAEs may be purchased from Mitsubishi Chemicals Foods Corporation (Tokyo, JP), which offers a variety of such SFAEs.

As used herein, "soyate" means a mixture of salts of fatty acids from soybean oil.

As used herein, "oilseed fatty acids" means fatty acids from plants, including but not limited to soybeans, peanuts, rapeseeds, barley, canola, sesame seeds, cottonseeds, palm kernels, grape seeds, olives, safflowers, sunflowers, copra, corn, coconuts, linseed, hazelnuts, wheat, rice, potatoes, cassavas, legumes, camelina seeds, mustard seeds, and combinations thereof.

As used herein "wet strength" means the measure of how well the web of fibers holding the paper together can resist a force of rupture when the paper is wet. The wet strength may be measured using a Finch Wet Strength Device from Thwing-Albert Instrument Company (West Berlin, NJ). Where the wet strength is typically effected by wet strength additives such as kymene, cationic glyoxylated resins, polyamidoamine-epichlorohydrin resins, polyamine-epichlorohydrin resins, including epoxide resins. In embodiments, SFAE coated cellulose based material effects such wet strength in the absence of such additives.

As used herein "wet" means covered or saturated with water or another liquid.

In embodiments of the invention as defined in the claims, the process includes mixing of a latex with an inorganic particle (e.g., clay, talc, calcium carbonate) to form a slurry, blending the slurry with a saccharide fatty acid ester to form an aqueous coating and applying said coating to a cellulosic material, where said process optionally comprises exposing the contacted cellulose-based material to heat, radiation, a catalyst or a combination thereof for a sufficient time to bind the coating to the cellulose based material. In a related embodiment, such radiation may include, but is not limited to UV, IR, visible light, or a combination thereof. In another related embodiment, the reaction may be carried out at room temperature (i.e., 25°C) to about 150°C, about 50°C to about 100°C, or about 60°C to about 80°C. Further, the resulting surface of the cellulosic material will exhibit a lower Cobb value compared to a surface of cellulosic material not so treated.

According to the present invention as defined in the claims, fatty acid esters of all saccharides, including mono-, di-saccharides and tri-saccharides, are adaptable for use in connection with the invention as defined in the claims. In a related embodiment, the saccharide fatty acid ester may be a mono-, di-, tri-, tetra-, penta-, hexa-, hepta-, or octaester, and combinations thereof, including that the fatty acid moieties may be saturated, unsaturated or a combination thereof.

While not being bound by theory, the interaction between the saccharide fatty acid ester and the cellulose-based

material may be by ionic, hydrophobic, van der Waals interaction, or covalent bonding, or a combination thereof. In a related embodiment of the invention as defined in the claims, the saccharide fatty acid ester binding to the cellulose-based material may be substantially irreversible (e.g., using an SFAE comprising a combination of saturated and unsaturated fatty acids).

Further, at a sufficient concentration, the binding of the saccharide fatty acid ester alone is enough to make the cellulose-based material hydrophobic: i.e., hydrophobicity is achieved in the absence of the addition of waxes, rosins, resins, diketenes, shellacs, vinyl acetates, PLA, PEI, oils, other water repellant chemicals or combinations thereof (i.e., secondary hydrophobes), including that other properties such as, *inter alia*, strengthening, stiffening, and bulking of the cellulose-based material is achieved by saccharide fatty acid ester binding alone.

An advantage of the invention as defined in the claims is that multiple fatty acid chains are reactive with the cellulose, and with the two saccharide molecules in the structure, for example, the sucrose fatty acid esters give rise to a stiff crosslinking network, leading to strength improvements in fibrous webs such as paper, paperboard, air-laid and wet-laid non-wovens, and textiles, thus may overcome potential unwanted effects of some fillers (e.g., calcium carbonates and lower bonding and tear strength). This is typically not found in other sizing or hydrophobic treatment chemistries. The saccharide fatty acid esters also generate/increase wet strength, a property absent when using many other water resistant chemistries.

Another advantage is that the saccharide fatty acid esters soften the fibers, increasing the space between them, thus, increasing bulk without substantially increasing weight. In addition, fibers and cellulose-based material modified may be repulped. Further, for example, water cannot be easily "pushed" past the low surface energy barrier into the sheet.

Saturated SFAE are typically solids at nominal processing temperatures, whereas unsaturated SFAE are typically liquids. This permits the formation of uniform, stable dispersions of saturated SFAE in aqueous coatings without significant interactions or incompatibilities with other coating components, which are typically hydrophilic. In addition, this dispersion allows for high concentrations of saturated SFAE to be prepared without adversely affecting coating rheology, uniform coating application, or coating performance characteristics. The coating surface will become hydrophobic when the particles of saturated SFAE melt and spread upon heating, drying and consolidation of the coating layer. In embodiments of the invention as defined in the claims, the method produces bulky, fibrous structures that retain strength even when exposed to water . Generally fibrous slurries that are dried form dense structures that are easily broken down upon exposure to water. Formed fiber products made using the method of the invention as defined in the claims may include paper plates, drink holders (e.g., cups), lids, food trays and packaging that would be light weight, strong, and be resistant to exposure to water and other liquids.

In embodiments of the invention as defined in the claims, saccharide fatty acid esters may be mixed with polyvinyl alcohol (PvOH) to produce sizing agents for water resistant coatings. As taught herein, a synergistic relationship between saccharide fatty acid esters and PvOH has been demonstrated, including that with inorganic mixtures, the amount of PvOH may be reduced. While it is known in the art that PvOH is itself a good film former, and forms strong hydrogen bonds with cellulose, it is not very resistant to water, particularly hot water. In embodiment of the invention as defined in the claims, the use of PvOH helps to emulsify saccharide fatty acid esters into an aqueous coating. In one embodiment, PvOH provides a rich source of OH groups for saccharide fatty acid esters to crosslink along the fibers, which increases the strength of paper, for example, particularly wet strength, and water resistance beyond what is possible with PvOH alone. For saturated saccharide fatty acid esters with free hydroxyls on the saccharide, a crosslinking agent such as a dialdehyde (e.g., glyoxal, glutaraldehyde, and the like) may also be used.

In embodiments of the invention as defined in the claims, the saccharide fatty acid esters comprise or consist essentially of sucrose esters of fatty acids. Many methods are known and available for making or otherwise providing the saccharide fatty acid esters of the present invention as defined in the claims, and all such methods are believed to be available for use within the invention as defined in the claims. For example, in certain embodiments of the invention as defined in the claims it may be preferred that the fatty acid esters are synthesized by esterifying a saccharide with one or more fatty acid moieties obtained from oil seeds including but not limited to, soybean oil, sunflower oil, olive oil, canola oil, peanut oil, and mixtures thereof.

In embodiments of the invention as defined in the claims, the saccharide fatty acid esters comprise a saccharide moiety, including but not limited to a sucrose moiety, which has been substituted by an ester moiety at one or more of its hydroxyl hydrogens. In a related embodiment, disaccharide esters have the structure of Formula I.

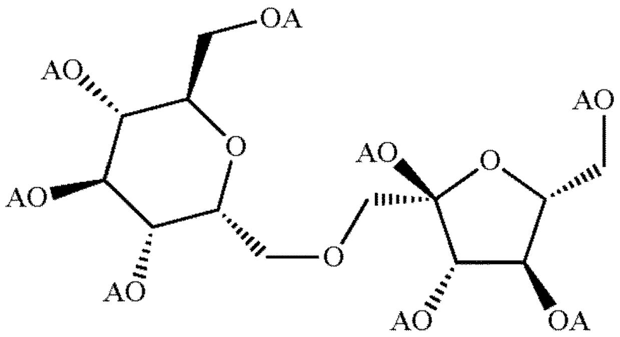

Formula I

where "A" is hydrogen or of Structure I below:

Structure I

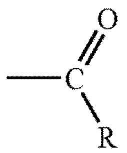

where "R" is a linear, branched, or cyclic, saturated or unsaturated, aliphatic or aromatic moiety of about eight to about 40 carbon atoms, and where at least one "A," is at least one, at least two, at least three, at least four, at least five, at least six, at least seven, and all eight "A" moieties of Formula are in accordance with Structure I. In a related embodiment, the saccharide fatty acid esters as described herein may be mono-, di-, tri-, tetra-, penta-, hexa-, hepta-, or octa-esters, and combinations thereof, where the aliphatic groups may be all saturated or may contain saturated and/or unsaturated groups or combinations thereof.

Suitable "R" groups include any form of aliphatic moiety, including those which contain one or more substituents, which may occur on any carbon in the moiety. Also included are aliphatic moieties which include functional groups within the moiety, for example, an ether, ester, thio, amino, phospho, or the like. Also included are oligomer and polymer aliphatic moieties, for example sorbitan, polysorbitan and polyalcohol moieties. Examples of functional groups which may be appended to the aliphatic (or aromatic) moiety comprising the "R" group include, but are not limited to, halogens, alkoxy, hydroxy, amino, ether and ester functional groups. In one embodiment of the invention as defined in the claims, said moieties may have crosslinking functionalities. In another embodiment of the invention as defined in the claims, the SFAE may be crosslinked to a surface (e.g., activated clay/pigment particles). In another embodiment of the invention as defined in the claims, double bonds present on the SFAE may be used to facilitate reactions onto other surfaces.

Suitable disaccharides include raffinose, maltodextrose, galactose, sucrose, combinations of glucose, combinations of fructose, maltose, lactose, combinations of mannose, combinations of erythrose, isomaltose, isomaltulose, trehalose, trehalulose, cellobiose, laminaribiose, chitobiose and combinations thereof.

In embodiments of the invention as defined in the claims, the substrate for addition of fatty acids may include starches, hemicelluloses, lignins or combinations thereof.

In embodiments of the invention as defined in the claims, a composition comprises a starch fatty acid ester, where the starch may be derived from any suitable source such as dent corn starch, waxy corn starch, potato starch, wheat starch, rice starch, sago starch, tapioca starch, sorghum starch, sweet potato starch, and mixtures thereof.

In more detail, the starch may be an unmodified starch, or a starch that has been modified by a chemical, physical, or enzymatic modification.

Chemical modification includes any treatment of a starch with a chemical that results in a modified starch (e.g., plastarch material). Within chemical modification are included, but not limited to, depolymerization of a starch, oxidation of a starch, reduction of a starch, etherification of a starch, esterification of a starch, nitrification of a starch, defatting of a starch, hydrophobization of a starch, and the like. Chemically modified starches may also be prepared by using a combination of any of the chemical treatments. Examples of chemically modified starches include the reaction of alkenyl succinic anhydride, particularly octenyl succinic anhydride, with starch to produce a hydrophobic esterified starch; the reaction of 2,3-epoxypropyltrimethylammonium chloride with starch to produce a cationic starch; the reaction of ethylene oxide with starch to produce hydroxyethyl starch; the reaction of hypochlorite with starch to produce an oxidized starch; the reaction of an acid with starch to produce an acid depolymerized starch; defatting of a starch with a solvent such as methanol, ethanol, propanol, methylene chloride, chloroform, carbon tetrachloride, and the like, to produce a defatted starch.

Physically modified starches are any starches that are physically treated in any manner to provide physically

modified starches. Within physical modification are included, but not limited to, thermal treatment of the starch in the presence of water, thermal treatment of the starch in the absence of water, fracturing the starch granule by any mechanical means, pressure treatment of starch to melt the starch granules, and the like. Physically modified starches may also be prepared by using a combination of any of the physical treatments. Examples of physically modified starches include the thermal treatment of starch in an aqueous environment to cause the starch granules to swell without granule rupture; the thermal treatment of anhydrous starch granules to cause polymer rearrangement; fragmentation of the starch granules by mechanical disintegration; and pressure treatment of starch granules by means of an extruder to cause melting of the starch granules.

Enzymatically modified starches are any starches that are enzymatically treated in any manner to provide enzymatically modified starches. Within enzymatic modification are included, but not limited to, the reaction of an alpha amylase with starch, the reaction of a protease with starch, the reaction of a lipase with starch, the reaction of a phosphorylase with starch, the reaction of an oxidase with starch, and the like. Enzymatically modified starches may be prepared by using a combination of any of the enzymatic treatments. Examples of enzymatic modification of starch include the reaction of alpha-amylase enzyme with starch to produce a depolymerized starch; the reaction of alpha amylase debranching enzyme with starch to produce a debranched starch; the reaction of a protease enzyme with starch to produce a starch with reduced protein content; the reaction of a lipase enzyme with starch to produce a starch with reduced lipid content; the reaction of a phosphorylase enzyme with starch to produce an enzyme modified phosphated starch; and the reaction of an oxidase enzyme with starch to produce an enzyme oxidized starch.

Disaccharide fatty acid esters may be sucrose fatty acid esters in accordance with Formula I wherein the "R" groups are aliphatic and are linear or branched, saturated or unsaturated and have between about 8 and about 40 carbon atoms.

As used herein the terms "saccharide fatty acid esters" and "sucrose fatty acid ester" include compositions possessing different degrees of purity as well as mixtures of compounds of any purity level. For example, the saccharide fatty acid ester compound can be a substantially pure material, that is, it can comprise a compound having a given number of the "A" groups substituted by only one species of Structure I moiety (that is, all "R" groups are the same and all of the sucrose moieties are substituted to an equal degree). It also includes a composition comprising a blend of two or more saccharide fatty acid ester compounds, which differ in their degrees of substitution, but wherein all of the substituents have the same "R" group structure. It also includes compositions which are a mixture of compounds having differing degrees of "A" group substitution, and wherein the "R" group substituent moieties are independently selected from two or more "R" groups of Structure I. In a related embodiment, "R" groups may be the same or may be different, including that said saccharide fatty acid esters in a composition may be the same or may be different (i.e., a mixture of different saccharide fatty acid esters).

For compositions of the present invention as defined in the claims, the composition may be comprised of saccharide fatty acid ester compounds having a high degree of substitution. In embodiments, the saccharide fatty acid ester is a sucrose polysoyate.

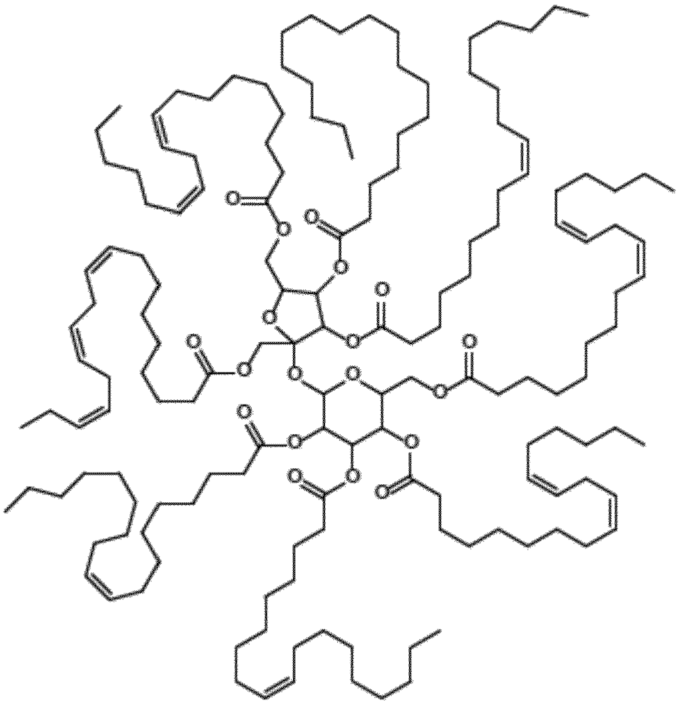

A Sucrose Polysoyate (SEFOSE® 1618U)

Saccharide fatty acid esters may be made by esterification with substantially pure fatty acids by known processes of esterification. They can be prepared also by trans-esterification using saccharide and fatty acid esters in the form of fatty acid glycerides derived, for example, from natural sources, for example, those found in oil extracted from oil seeds, for example soybean oil. Trans-esterification reactions providing sucrose fatty acid esters using fatty acid glycerides are described, for example, in U.S. Pat. Nos. 3,963,699; 4,517,360; 4,518,772; 4,611,055; 5,767,257; 6,504,003; 6,121,440; and 6,995,232, and WO1992004361 A1.

In addition to making hydrophobic sucrose esters via transesterification, similar hydrophobic properties may be achieved in fibrous, cellulosic articles by directly reacting acid chlorides with polyols containing analogous ring structures to sucrose.

As mentioned above, sucrose fatty acid esters may be prepared by trans-esterification of sucrose from methyl ester feedstocks which have been prepared from glycerides derived from natural sources (see, e.g., 6,995,232). As a consequence of the source of the fatty acids, the feedstock used to prepare the sucrose fatty acid ester contains a range of saturated and unsaturated fatty acid methyl esters having fatty acid moieties containing between 12 and 40 carbon atoms. This will be reflected in the product sucrose fatty acid esters made from such a source in that the sucrose moieties comprising the product will contain a mixture of ester moiety substituents, wherein, with reference to Structure I above, the "R" groups will be a mixture having between 12 and 26 carbon atoms with a ratio that reflects the feedstock used to prepare the sucrose ester. Further to illustrate this point, sucrose esters derived from soybean oil will be a mixture of species, having "R" group structures which reflect that soybean oil comprises 26 wt. % triglycerides of oleic acid ($R_3C-CH_2]_7-CH=CH-[CH_2]_7-C(O)OH$), 49 wt. % triglycerides of linoleic acid ($H_3C-[CH_2]_3-[-CH_2-CH=CH]_2-[-CH_2-]_7-C(O)OH$), 11 wt. % of triglycerides of linolenic acid ($H_3C-[-CH_2-CH=CH-]_3-[-CH_2-]_7-C(O)OH$), and, 14 wt. % of triglycerides of various saturated fatty acids, as described in the Seventh Ed. Of the Merck Index. All of these fatty acid moieties are represented in the "R" groups of the substituents in the product sucrose fatty acid ester. Accordingly, when referring to a sucrose fatty acid ester herein as the product of a reaction employing a fatty acid feed stock derived from a natural source, for example, sucrose soyate, the term is intended to include all of the various constituents which are typically found as a consequence of the source from which the sucrose fatty acid ester is prepared. In a related embodiment, the saccharide fatty acid esters may exhibit low viscosity (e.g., between about 10 to 2000 centipoise at room temperature or under standard atmospheric pressure). In another embodiment, the unsaturated fatty acids, may have one, two, three or more double bonds.

In embodiments of the invention as defined in the claims, the saccharide fatty acid ester, and in embodiment, the disaccharide ester, is formed from fatty acids having greater than about 6 carbon atoms, from about 8 to 16 carbon atoms, from about 8 to about 18 carbon atoms, from about 14 to about 18 carbons atoms, from about 16 to about 18 carbon atoms,

from about 16 to about 20 carbon atoms, and from about 20 to about 40 carbon atoms, on average.

In embodiments of the invention as defined in the claims, the saccharide fatty acid ester may be present in different concentrations to achieve hydrophobicity depending on the form of the cellulose-based material. In one embodiment, when a saccharide fatty acid ester (SFAE) is bound as a coating on the cellulose-based material, the SFAE is present at a coating weight of at least about $0.1g/m^2$ to about $1.0g/m^2$, about $1.0g/m^2$ to about $2.0g/m^2$, about $2g/m^2$ to about $3g/m^2$ on a surface of the cellulose-based material. In a related embodiment, it may be present from about $3g/m^2$ to about $4g/m^2$, about $4g/m^2$ to about $5g/m^2$, about 5 $g/m^2$ to about $10g/m^2$, about $10g/m^2$ to about $20g/m^2$. In another embodiment, when the cellulose-based material is a solution containing cellulose fiber, the SFAE is present at a concentration of at least about 0.025% (wt/wt) of the total fiber present. In a related embodiment, it may be present at about 0.05% (wt/wt) to about 0.1% (wt/wt), about 0.1% (wt/wt) to about 0.5% (wt/wt), about 0.5% (wt/wt) to about 1.0% (wt/wt), about 1.0% (wt/wt) to about 2.0% (wt/wt), about 2.0% (wt/wt) to about 3.0% (wt/wt), about 3.0% (wt/wt) to about 4.0% (wt/wt), about 4.0% (wt/wt) to about 5.0% (wt/wt), about 5.0%(wt/wt) to about 10% (wt/wt), about 10% (wt/wt) to about 50% (wt/wt) of the total fiber present. In a further related embodiment, the amount of SFAE may be equal to the amount of fiber present. In some embodiments of the invention as defined in the claims, the SFAE may coat the entire outer surface of a cellulose-based material (e.g., coat an entire piece of paper or cellulose-containing article).

In other embodiments of the invention as defined in the claims, a coating may comprise between about 0.9% to about 1.0%, about 1.0% to about 5.0%, about 5.0 to about 10%, about 10% to about 20%, about 20% to about 30%, about 40% to about 50% saccharide fatty acid ester by weight of the coating (wt/wt). In a related embodiment, the coating may contain between about 25% to about 35% saccharide fatty acid ester by weight of the coating (wt/wt).

In embodiments of the invention as defined in the claims, the cellulose-based material includes, but is not limited to, paper, paperboard, paper sheets, paper pulp, cups, boxes, trays, lids, release papers/liners, compost bags, shopping bags, shipping bags, bacon board, tea bags, insulating material, containers for coffee or tea, pipes and water conduits, food grade disposable cutlery, plates and bottles, screens for TV and mobile devices, clothing (e.g., cotton or cotton blends), bandages, pressure sensitive labels, pressure sensitive tape, feminine products, and medical devices to be used on the body or inside it such as contraceptives, drug delivery devices, container for pharmaceutical materials (e.g., pills, tablets, suppositories, gels, etc.), and the like. Also, the coating technology of the invention as defined in the claims may be used on furniture and upholstery, outdoors camping equipment and the like.

In one embodiment of the invention as defined in the claims, the coatings as described herein are resistant to pH in the range of between about 3 to about 9. In a related embodiment, the pH may be from about 3 to about 4, about 4 to about 5, about 5 to about 7, about 7 to about 9.

In embodiments of the invention as defined in the claims, a method for treating a surface of a cellulose containing (or cellulosic) material includes applying to the surface a composition containing an alkanoic acid derivative having the formula (II) or (III):

R-CO-X    Formula (II)

$X\text{-}CO\text{-}R\text{-}CO\text{-}X_1$    Formula (III),

where R is a straight-chain, branched-chain, or cyclic aliphatic hydrocarbon radical having from 6 to 50 carbon atoms, and where X and $X_1$ are independently Cl, Br, R-COO-R, or O(CO)OR, where when the alkanoic acid derivative comprises formula (III) X or $X_1$ is the same or is different, where the SFAE is a carrier, and where the method does not require an organic base, gaseous HCl, VOCs or catalyst.

In embodiments of the invention as defined in the claims, an alkanoic acid derivative is mixed with a saccharide fatty acid ester to form an emulsion, where the emulsion is used to treat the cellulose-based material.

In embodiments of the invention as defined in the claims, the saccharide fatty acid ester may be an emulsifying agent and may comprise a mixture of one or more mono-, di-, tri-, tetra-, penta-, hexa-, hepta-, or octaesters. In another embodiment, the fatty acid moiety of the saccharide fatty acid ester may contain saturated groups, unsaturated groups or a combination thereof. In one embodiment, the saccharide fatty acid ester-containing emulsion may contain proteins, polysaccharides and/or lipids, including but not limited to, milk proteins (e.g., casein, whey protein and the like), wheat glutens, gelatins, prolamines (e.g., corn zein), soy protein isolates, starches, acetylated polysaccharides, alginates, carrageenans, chitosans, inulins, long chain fatty acids, waxes, and combinations thereof.

In embodiments of the invention as defined in the claims, the saccharide fatty acid ester emulsifiers may be used to carry coatings or other chemicals used for paper manufacturing including, but not limited to, agalite, esters, diesters, ethers, ketones, amides, nitriles, aromatics (e.g., xylenes, toluenes), acid halides, anhydrides, alkyl ketene dimer (AKD), alabaster, alganic acid, alum, albarine, glues, barium carbonate, barium sulfate, chlorine dioxide, dolomite, diethylene triamine penta acetate, EDTA, enzymes, formamidine sulfuric acid, guar gum, gypsum, lime, magnesium bisulfate, milk of lime, milk of magnesia, polyvinayl alcohol (PvOH), rosins, rosin soaps, satins, soaps/fatty acids, sodium bisulfate, soda-ash, titania, surfactants, starches, modified starches, hydrocarbon resins, polymers, waxes, polysaccharides, proteins,

latex, and combinations thereof. In embodiments, the mixture may contain one or more SFAEs and one or more of the following inorganic particles: clay (kaolin, bentonite), calcium carbonate (both GCC and PCC), talc (magnesium silicate), and titanium dioxide.

In embodiments of the invention as defined in the claims, the cellulose-containing material generated by the methods of the invention as defined in the claims exhibits greater hydrophobicity or water-resistance relative to the cellulose-containing material without the treatment. In a related embodiment, the treated cellulose-containing material exhibits greater lipophobicity or grease resistance relative to the cellulose-containing material without the treatment. In a further related embodiment, the treated cellulose-containing material may be biodegradable, compostable, and/or recyclable. In one embodiment, the treated cellulose-containing material is hydrophobic (water resistant) and lipophobic (grease resistant).

In embodiments of the invention as defined in the claims, the treated cellulose-containing material may have improved mechanical properties compared to that same material untreated. For example, paper bags treated by the invention as defined in the claims show increased burst strength, Gurley Number, Tensile Strength and/or Energy of Maximum Load. In one embodiment, the burst strength is increased by a factor of between about 0.5 to 1.0 fold, between about 1.0 and 1.1 fold, between about 1.1 and 1.3 fold, between about 1.3 to 1.5 fold. In another embodiment, the Gurley Number increased by a factor of between about 3 to 4 fold, between about 4 to 5 fold, between about 5 to 6 fold and about 6 to 7 fold. In still another embodiment, the Tensile Strain increased by a factor of between about 0.5 to 1.0 fold, between about 1.0 to 1.1 fold, between about 1.1 to 1.2 fold and between about 1.2 to 1.3 fold. And in another embodiment, the Energy of Max Load increased by a factor of between about 1.0 to 1.1 fold, between about 1.1 to 1.2 fold, between about 1.2 to 1.3 fold, and between about 1.3 to 1.4 fold.

In embodiments of the invention as defined in the claims, the cellulose-containing material is a base paper comprising microfibrillated cellulose (MFC) or cellulose nanofiber (CNF) as described for example in U.S. Pub. No. 2015/0167243, where the MFC or CNF is added during the forming process and paper making process and/or added as a coating or a secondary layer to a prior forming layer to decrease the porosity of said base paper. In a related embodiment, the base paper is contacted with the saccharide fatty acid ester as described above. In a further related embodiment, the contacted base paper is further contacted with a polyvinyl alcohol (PvOH). In embodiments of the invention as defined in the claims, the resulting contacted base paper is tuneably water and lipid resistant. In a related embodiment, the resulting base paper may exhibit a Gurley value of at least about 10-15 (i.e., Gurley Air Resistance (sec/100 cc, 20 oz. cyl.)), or at least about 100, at least about 200 to about 350. In one embodiment, the saccharide fatty acid ester coating may be a laminate for one or more layers or may provide one or more layers as a laminate or may reduce the amount of coating of one or more layers to achieve the same performance effect (e.g., water resistance, grease resistance, and the like). In a related embodiment, the laminate may comprise a biodegradable and/or composable heat seal or adhesive.

In embodiments of the invention as defined in the claims, the saccharide fatty acid esters may be formulated as emulsions, where the choice emulsifying agent and the amount employed is dictated by the nature of the composition and the ability of the agent to facilitate the dispersion of the saccharide fatty acid ester. In one embodiment, the emulsifying agents may include, but are not limited to, water, buffers, polyvinyl alcohol (PvOH), carboxymethyl cellulose (CMC),latex, milk proteins, wheat glutens, gelatins, prolamines, soy protein isolates, starches, acetylated polysaccharides, alginates, carrageenans, chitosans, inulins, long chain fatty acids, waxes, agar, alginates, glycerol, gums, lecithins, poloxamers, mono-, di-glycerols, monosodium phosphates, monostearate, propylene glycols, detergents, cetyl alcohol, and combinations thereof. In another embodiment, the saccharide ester:emulsifying agent ratios may be from about 0.1:99.9, from about 1:99, from about 10:90, from about 20:80, from about 35:65, from about 40:60, and from about 50:50. It will be apparent to one of skill in the art that ratios may be varied depending on the property(ies) desired for the final product.

In embodiments of the invention as defined in the claims, the saccharide fatty acid esters may be combined with one or more coating components for internal and surface sizing (alone or in combination), including but not limited to, binders (e.g., starch, soy protein, polymer emulsions, PvOH, latex), and additives (e.g., glyoxal, glyoxalated resins, zirconium salts, calcium stearate, lecithin oleate, polyethylene emulsion, carboxymethyl cellulose, acrylic polymers, alginates, polyacrylate gums, polyacrylates, microbiocides, oil based defoamers, silicone based defoamers, stilbenes, direct dyes and acid dyes). In a related embodiment, such components may provide one or more properties, including but not limited to, building a fine porous structure, providing light scattering surface, improving ink receptivity, improving gloss, binding pigment particles, binding coatings to paper, base sheet reinforcement, filling pores in pigment structure, reducing water sensitivity, resisting wet pick in offset printing, preventing blade scratching, improving gloss in supercalendering, reducing dusting, adjusting coating viscosity, providing water holding, dispersing pigments, maintaining coating dispersion, preventing spoilage of coating/coating color, controlling foaming, reducing entrained air and coating craters, increasing whiteness and brightness, and controlling color and shade. It will be apparent to one of skill in the art that combinations may be varied depending on the property(ies) desired for the final product.

In embodiments of the invention as defined in the claims, the methods employing said saccharide fatty acid esters may be used to lower the cost of applications of primary/secondary coating (e.g., silicone-based layer, starch-based layer, clay-based layer, PLA-layer, Bio-PBS, PEI-layer and the like) by providing a layer of material that exhibits a necessary

property (e.g., water resistance, low surface energy, and the like), thereby reducing the amount of primary/secondary layer necessary to achieve that same property. In one embodiment, materials may be coated on top of an SFAE layer (e.g., heat sealable agents). In embodiments, the composition is fluorocarbon and silicone free.

In embodiments of the invention as defined in the claims, the compositions increase both mechanical and thermal stability of the treated product. In one embodiment, the surface treatment is thermostable at temperatures between about -100°C to about 300°C. In further related embodiment, the surface of the cellulose-based material exhibits a water contact angle of between about 60° to about 120°. In another related embodiment, the surface treatment is chemically stable at temperatures of between about 200°C to about 300°C.

The substrate which may be dried prior to application (e.g., at about 80-150°C), may be treated with the modifying composition by dipping, for example, and allowing the surface to be exposed to the composition for less than 1 second. The substrate may be heated to dry the surface, after which the modified material is ready for use. In one embodiment of the invention as defined in the claims, the substrate may be treated by any suitable coating/sizing process typically carried out in a paper mill (see, e.g., Smook, G., Surface Treatments in Handbook for Pulp & Paper Technologists, (2016), 4th Ed., Cpt. 18, pp. 293-309, TAPPI Press, Peachtree Corners, GA USA).

No special preparation of the material is necessary in practicing the invention as defined in the claims, although for some applications, the material may be dried before treatment. In embodiments of the invention as defined in the claims, the methods may be used on any cellulose-based surface, including but not limited to, a film, a rigid container, fibers, pulp, a fabric or the like. In one embodiment of the invention as defined in the claims, the saccharide fatty acid esters or coating agents may be applied by conventional size press (vertical, inclined, horizontal), gate roll size press, metering size press, calender size application, tube sizing, on-machine, off-machine, single-sided coater, double-sided coater, short dwell, simultaneous two-side coater, blade or rod coater, gravure coater, gravure printing, flexographic printing, ink-jet printing, laser printing, supercalendering, and combinations thereof.

Depending on the source, the cellulose may be paper, paperboard, pulp, softwood fiber, hardwood fiber, or combinations thereof, nanocellulose, cellulose nanofibres, whiskers or microfibril, microfibrillated, cotton or cotton blends, other non-wood fibers, (such as sisal, jute or hemp, flax and straw) cellulose nanocrystals, or nanofibrilated cellulose.

In embodiments of the invention as defined in the claims, the amount of saccharide fatty acid ester coating applied is sufficient to completely cover at least one surface of a cellulose-containing material. For example, in embodiments, the saccharide fatty acid ester coating may be applied to the complete outer surface of a container, the complete inner surface of a container, or a combination thereof, or one or both sides of a base paper. In other embodiments, the complete upper surface of a film may be covered by the saccharide fatty acid ester coating, or the complete under surface of a film may be covered by the saccharide fatty acid ester coating, or a combination thereof. In some embodiments, the lumen of a device/instrument may be covered by the coating or the outer surface of the device/instrument may be covered by the saccharide fatty acid ester coating, or a combination thereof. In embodiment, the amount of saccharide fatty acid ester coating applied is sufficient to partially cover at least one surface of a cellulose-containing material. For example, only those surfaces exposed to the ambient atmosphere are covered by the saccharide fatty acid ester coating, or only those surfaces that are not exposed to the ambient atmosphere are covered by the saccharide fatty acid ester coating (e.g., masking). As will be apparent to one of skill in the art, the amount of saccharide fatty acid ester coating applied may be dependent on the use of the material to be covered. In one embodiment of the invention as defined in the claims, one surface may be coated with a saccharide fatty acid ester and the opposing surface may be coated with an agent including, but not limited to, proteins, wheat glutens, gelatins, prolamines, soy protein isolates, starches, modified starches, acetylated polysaccharides, alginates, carrageenans, chitosans, inulins, long chain fatty acids, waxes, and combinations thereof. In a related embodiment, the SFAE can be added to a furnish, and the resulting material on the web may be provided with an additional coating of SFAE.

Any suitable coating process may be used to deliver any of the various saccharide fatty acid ester coatings and/or emulsions applied in the course of practicing of the invention as defined in the claims. In embodiments thereof, saccharide fatty acid ester coating processes include immersion, spraying, painting, printing, and any combination of any of these processes, alone or with other coating processes adapted for practicing the methods.

By increasing the concentration of saccharide fatty acid ester, for example, the composition of the invention as defined in the claims may react more extensively with the cellulose being treated with the net result that again improved water-repellent/lipid resistance characteristics are exhibited. However, higher coat weights do not necessarily translate to increased water resistance. In one embodiment, various catalysts might allow for speedier "curing" to precisely tune the quantity of saccharide fatty acid ester to meet specific applications.

It will be apparent to one of skill in the art that the selection of cellulose to be treated, the saccharide fatty acid ester, the reaction temperature, and the exposure time are process parameters that may be optimized by routine experimentation to suit any particular application for the final product.

The derivatized materials have altered physical properties which may be defined and measured using appropriate tests known in the art. For hydrophobicity the analytical protocol may include, but is not limited to, the contact angle measurement and moisture pick-up. Other properties include, stiffness, WVTR, porosity, tensile strength, lack of substrate

degradation, burst and tear properties. A specific standardized protocol to follow is defined by the American Society for Testing and Materials (protocol ASTM D7334 - 08).

The permeability of a surface to various gases such as water vapour and oxygen may also be altered by the saccharide fatty acid ester coating process as the barrier function of the material is enhanced. The standard unit measuring permeability is the Barrer and protocols to measure these parameters are also available in the public domain (ASTM std F2476-05 for water vapour and ASTM std F2622-8 for oxygen).

In embodiments of the invention as defined in the claims, materials treated according to the presently disclosed procedure display a complete biodegradability as measured by the degradation in the environment under microorganismal attack.

Various methods are available to define and test biodegradability including the shake-flask method (ASTM E1279 - 89(2008)) and the Zahn-Wellens test (OECD TG 302 B).

Various methods are available to define and test compostability including, but not limited to, ASTM D6400.

Materials suitable for treatment by the invention as defined in the claims include various forms of cellulose, such as cotton fibers, plant fibers such as flax, wood fibers, regenerated cellulose (rayon and cellophane), partially alkylated cellulose (cellulose ethers), partially esterified cellulose (acetate rayon), and other modified cellulose materials which have a substantial portion of their surfaces available for reaction/binding. As stated above, the term "cellulose" includes all of these materials and others of similar polysaccharide structure and having similar properties. Among these the relatively novel material microfibrillated cellulose (cellulose nanofiber) (see e.g., US patent US4,374,702 and US Pub. Nos. 2015/0167243 and 2009/0221812) is particularly suitable for this application. In other embodiments of the invention as defined in the claims, celluloses may include but are not limited to, cellulose triacetate, cellulose propionate, cellulose acetate propionate, cellulose acetate butyrate, nitrocellulose (cellulose nitrate), cellulose sulfate, celluloid, methylcellulose, ethylcellulose, ethyl methyl cellulose, hydroxyethyl cellulose, hydroxypropyl cellulose, cellulose nanocrystals, hydroxyethyl methyl cellulose, hydroxypropyl methyl cellulose, ethyl hydroxyethyl cellulose, carboxymethyl cellulose, and combinations thereof.

The modification of the cellulose in accordance with the invention as defined in the claims, in addition to increasing its hydrophobicity, may also increase its tensile strength, flexibility and stiffness, thereby further widening its spectrum of use. All biodegradable and partially biodegradable products made from or by using the modified cellulose disclosed in this application are within the scope of the invention as defined in the claims, including recyclable and compostable products.

Among the possible applications of the coating technology such items include, but are not limited to, containers for all purpose such as paper, paperboard, paper pulp, cups, lids, boxes, trays, release papers/liners, compost bags, shopping bags, pipes and water conduits, food grade disposable cutlery, plates and bottles, screens for TV and mobile devices, clothing (e.g., cotton or cotton blends), bandages, pressure sensitive labels, pressure sensitive tape, feminine products, and medical devices to be used on the body or inside it such as contraceptives, drug delivery devices, and the like. Also, the coating technology of the invention as defined in the claims may be used on furniture and upholstery, outdoors camping equipment and the like.

## EXAMPLES

Example 1. Saccharide Fatty Acid Ester Formulations

SEFOSE® is a liquid at room temperature and all coatings/emulsions containing this material were applied at room temperature using a bench top drawdown device. Rod type and size were varied to create a range of coat weights.

Formulation 1

50 ml of SEFOSE® were added to a solution containing 195 ml of water and 5 grams of carboxymethylcellulose (FINNFIX® 10; CP Kelco, Atlanta, GA). This formulation was mixed using a Silverson Homogenizer set to 5000 rpm for 1 minute. This emulsion was coated on a 50 gram base sheet made of bleached hardwood pulp and an 80 gram sheet composed of unbleached softwood. Both papers were placed into an oven (105°C) for 15 minutes to dry. Upon removal from the oven, sheets were placed on the lab bench and 10 drops of water (room temperature) applied via pipette to each sheet. The base sheets selected for this testing would absorb a droplet of water immediately, whereas sheets coated with varying amounts of SEFOSE® showed increasing levels of water resistance as coat weight increased (see Table 1).

Table 1. Base Sheet Results with SEFOSE®

| Coat weight g/m$^2$ | 50g Hardwood Base Water Holdout (minutes) | 80g Softwood Base Holdout (minutes) |
|---|---|---|
| 3.2 | 1 | 0.5 |

(continued)

| Coat weight g/m$^2$ | 50g Hardwood Base Water Holdout (minutes) | 80g Softwood Base Holdout (minutes) |
|---|---|---|
| 4.1 | 14 | 9 |
| 6.4 | 30 | 25 |
| 8.5 | 50 | 40 |
| 9.2 | 100+ | 100+ |

It was observed that water resistance was less in the heavier sheet and no water resistance was achieved unless the sheet was dry.

Formulation 2

Addition of SEFOSE® to cup stock: (note this is single layer stock with no MFC treatment. 110 gram board made of Eucalyptus pulp). 50 grams of SEFOSE® was added to 200 grams of 5% cooked ethylated starch (Ethylex 2025) and stirred using a bench top kady mill for 30 seconds. Paper samples were coated and placed in the oven at 105°C for 15 minutes. 10-15 test droplets were placed on the coated side of the board and water holdout time was measured and recorded in the table below. Water penetration on the untreated board control was instant (see Table 2).

Table 2. Penetration of Hot Water for SEFOSE® Treated Cup Stock

| Quantity Applied g/m$^2$ | Time Required for Hot (80°C) Water to Penetrate |
|---|---|
| 2.3 | 0.05 hr |
| 4.1 | 0.5 hr |
| 6.2 | 1.2 hr |
| 8.3 | 3.5 hr |
| 9.6 | ~ 16 hr |

Formulation 3

Pure SEFOSE® was warmed to 45°C and placed in a spray bottle. A uniform spray was applied to the paper stock listed in the previous example, as well as to a piece of fiberboard and an amount of cotton cloth. When water drops were placed on the samples, penetration into the substrate occurred within 30 seconds, however after drying in the oven for 15 minutes at 105°C beads of water evaporated before being absorbed into the substrate.

Continued investigation concerned whether SEFOSE® might be compatible with compounds used for oil and grease resistant coatings. SEFOSE® is useful for water resistance as well as stiffness improvements. 240 gram board stock was used to do stiffness tests. Table 3 shows the results. These data were obtained at a single coat weight: 5 grams/square meter with a 5 sample average being reported. Results are in Taber stiffness units recorded with our V-5 Taber stiffness tester Model 150-E.

Table 3. Stiffness Test

| Sample tested | Machine Direction Stiffness | Cross Direction Stiffness |
|---|---|---|
| Control board - no coating | 77.6 | 51.8 |
| SEFOSE® | 85.9 | 57.6 |
| Erucic Acid | 57.9 | 47.4 |
| Palmitoyl chloride | 47.7 | 39.5 |

Example 2. Bonding of Saccharide Ester to Cellulosic Substrate

In an effort to determine whether SEFOSE® was reversibly bound to a cellulosic material, pure SEFOSE® was mixed with pure cellulose at ratio of 50:50. The SEFOSE® was allowed to react for 15 min at 300°F and the mixture was

extracted with methylene chloride (non-polar solvent) or distilled water. The samples were refluxed for 6 hours, and gravimetric analysis of the samples was carried out.

Table 4. Extraction of SEFOSE® from Cellulosic Material

| Sample | Total Mass | SEFOSE® Mass | SEFOSE® Extracted | % SEFOSE® Retained |
|---|---|---|---|---|
| $CH_2Cl_2$ | 2.85 | 1.42 | 0.25 | 83% |
| $H_2O$ | 2.28 | 1.14 | 0.08 | 93% |

Example 3. Examination of Cellulosic Surfaces

Scanning electron microscope images of base papers with and without MFC illustrate how a less porous base has potential to require far less waterproofing agents reacted to the surface. FIGs. 1-2 show untreated, medium porosity Whatman filter paper. FIGs. 1 and 2 show the relative high surface area exposed for a derivatizing agent to react with; however, it also shows a highly porous sheet with plenty of room for water to escape. FIGs. 3 and 4 show a side by side comparison of paper made with recycled pulp before and after coating with MFC. (They are two magnifications of the same samples, no MCF obviously on the left side of image). The testing shows that derivatization of a much less porous sheet shows more promise for long term water/vapor barrier performance. The last two images are just close ups taken of an average "pore" in a sheet of filter paper as well as a similar magnification of CNF coated paper for contrast purposes.

The data above demonstrate a critical point: that addition of more material results in a corresponding increase in performance. While not being bound by theory, the reaction appears to be faster with unbleached papers, suggesting that the presence of lignin may speed the reaction.

The fact that a product like the SEFOSE® is a liquid, it can readily emulsify, suggesting that it can easily be adapted to work in coating equipment commonly used in paper mills.

Example 4. "Phluphi"

Liquid SEFOSE® was mixed and reacted with bleached hardwood fiber to generate a variety of ways to create a waterproof handsheet. When the sucrose ester was mixed with pulp prior to sheet formation it was found that the majority of it is retained with the fiber. With sufficient heating and drying, a brittle, fluffy but very hydrophobic handsheet was formed. In this example, 0.25 grams SEFOSE® was mixed with 4.0 grams bleached hardwood fiber in 6 Liters of water. This mixture was stirred by hand and the water drained in a standard handsheet mold. The resulting fiber mat was removed and dried for 15 minutes at 325°F. The produced sheet exhibited significant hydrophobicity as well as greatly reduced hydrogen bonding between the fibers themselves. (Water contact angle was observed to be greater than 100 degrees). An emulsifier may be added. SEFOSE® to fiber may be from about 1:100 to 2:1.

Subsequent testing shows that talc is only a spectator in this and was left out of additional testing.

Example 5. Environmental Effects on SEFOSE® Coating Properties

In an effort to better understand the mechanism of sucrose esters reaction with fiber, low viscosity coatings were applied to a bleach kraft sheet that had wet strength resin added, but no water resistance (no sizing). Coatings were all less than 250 cps as measured using a Brookfield Viscometer at 100 rpm.

SEFOSE® was emulsified with Ethylex 2025 (starch) and applied to the paper via a gravure roll. For comparison, SEFOSE® was also emulsified with Westcote 9050 PvOH. As shown in FIG. 5, oxidation of the double bonds in SEFOSE® is enhanced by the presence of heat and additional chemical environments that enhance oxidative chemistry (see also, Table 5).

Table 5. Environmental Effects on SEFOSE® (Minutes to Failure)

| | | SEFOSE® | | |
|---|---|---|---|---|
| Time | PVOH | -PVOH | Ethylex | 3:1 |
| 0 | 0.08 | 0.07 | 0.15 | 2 |
| 1 | 0.083 | 0.11 | 0.15 | 1.8 |
| 2 | 0.08 | 0.18 | 0.13 | 1.8 |
| 5 | 0.09 | 0.25 | 0.1 | 1.3 |
| 10 | 0.08 | 0.4 | 0.1 | 0.9 |
| 30 | 0.08 | 1.1 | 0.08 | 0.8 |

(continued)

| Time | PVOH | SEFOSE® -PVOH | Ethylex | 3:1 |
|---|---|---|---|---|
| 60 | 0.08 | 3.8 | 0.08 | 0.8 |
| 120 | 0.08 | 8 | 0.08 | 0.7 |
| 500 | 0.07 | 17 | 0.07 | 0.4 |

Example 6. Effect of Unsaturated vs. Saturated Fatty Acid Chains

SEFOSE® was reacted with bleached softwood pulp and dried to form a sheet. Subsequently, extractions were carried out with $CH_2Cl_2$, toluene and water to determine the extent of the reaction with pulp. Extractions were performed for at least 6 hours using Soxhlet extraction glassware. Results of the extractions are shown in Table 6.

Table 6. Extraction of SEFOSE®-bound Pulp

| | Water | $CH_2Cl_2$ | Toluene |
|---|---|---|---|
| Mass of Dry Pulp | 8.772g | 9.237g | 8.090g |
| SEFOSE® added | 0.85g | 0.965g | 0.798g |
| Amount Extracted | 0.007g | 0.015g | 0.020g |

The data indicate that essentially all of the SEFOSE® remains in the sheet. To further verify this, the same procedure was carried out on the pulp alone, and results shows that approximately 0.01g per 10g of pulp was obtained. While not being bound by theory, this could easily be accounted for as residual pulping chemicals or more likely extractives that had not been completely removed.

Pure fibers of cellulose (e.g., $\alpha$-cellulose from Sigma Aldrich, St. Louis, MO) were used, and the experiment repeated. As long as the loading levels of SEFOSE® remained below about 20% of the mass of the fibers, over 95% of the mass of SEFOSE® was retained with the fibers and not extractable with either polar on non-polar solvents. While not being bound by theory, optimizing baking time and temperature may further enhance the sucrose esters remaining with the fibers.

As shown, the data demonstrate a general inability to extract SEFOSE® out of the material after drying. On the other hand, when the fatty acids containing all saturated fatty acid chains are used instead of SEFOSE® (e.g., OLEAN®, available from Procter & Gamble Chemicals (Cincinnati, OH)), nearly 100% of the of the material can be extracted using hot water (at or above 70°C). OLEAN® is identical to SEFOSE® with the only change being saturated fatty acids attached (OLEAN®) instead of unsaturated fatty acids (SEFOSE®).

Another noteworthy aspect is that multiple fatty acid chains are reactive with the cellulose, and with the two saccharide molecules in the structure, the SEFOSE® gives rise to a stiff crosslinking network leading to strength improvements in fibrous webs such as paper, paperboard, air-laid and wet-laid non-wovens, and textiles.

Example 7. SEFOSE® Additions to Achieve Water Resistance

2 and 3 gram handsheets were made using both hardwood and softwood kraft pulps. When SEFOSE® was added to the 1% pulp slurry at a level of 0.1% or greater and water was drained forming the handsheet, SEFOSE® was retained with the fibers, where it imparted water resistance. From 0.1% to 0.4% SEFOSE®, water beaded on the surface for a few seconds or less. After SEFOSE® loading went above 0.4%, the time of water resistance quickly increased to minutes and then to hours for loading levels greater than 1.5%.

Example 8. Production of Bulky Fibrous Material

Addition of SEFOSE® to pulp acts to soften the fibers, increase space between them increasing bulk. For example, a 3% slurry of hardwood pulp containing 125g (dry) of pulp was drained, dried and found to occupy 18.2 cubic centimeters volume. 12.5g of SEFOSE® was added to the same 3% hardwood pulp slurry that contained an equivalent of 125g dry fiber. Upon draining the water and drying, the resulting mat occupied 45.2 cubic centimeters.

30g of a standard bleached hardwood kraft pulp (produced by Old Town Fuel and Fiber, LLC, Old Town, ME) was sprayed with SEFOSE® that had been warmed to 60°C. This 4.3 $cm^3$ was placed in a disintegrator for 10,000 rpm and essentially repulped. The mixture was poured through a handsheet mold and dried at 105°C. The resulting hydrophobic

pulp occupied a volume of 8.1 $cm^3$. A 2 inch square of this material was cut and placed in a hydraulic press with 50 tons of pressure applied for 30 seconds. The volume of the square was reduced significantly but still occupied 50% more volume than the same 2 inch square cut for the control with no pressure applied.

It is significant that not only is an increase in bulk and softness observed, but that a forcibly repulped mat when the water was drained resulted in a fiber mat where all of the hydrophobicity was retained. This quality, in addition to the observations that water cannot be easily "pushed" past the low surface energy barrier into the sheet, is of value. Attachment of hydrophobic single-chains of fatty acids do not exhibit this property.

While not being bound by theory, this represent additional evidence that SEFOSE® is reacting with the cellulose and that the OH groups on the surface of the cellulose fibers are no longer available to participate in subsequent hydrogen bonding. Other hydrophobic materials interfere with initial hydrogen bonding, but upon repulping this effect is reversed and the OH groups on the cellulose are free to participate in hydrogen bonding upon redrying.

Example 9. Bag Paper Testing Data

The following table (Table 7) illustrates properties imparted by coating 5-7g/$m^2$ with a SEFOSE® and polyvinyl alcohol (PvOH) mixture onto an unbleached kraft bag stock (control). Also included for reference are commercial bags.

Table 7. Bag Paper Tests

| Paper Type | Caliper (0.001 in) | Tensile (lb/$in^2$) | Burst (psi) |
|---|---|---|---|
| Trial bag (control) | 3.26 | 9.45 | 52.1 |
| Trial bag with SEFOSE® | 3.32 | 15.21 | 62.6 |
| Sub Sandwich bag | 2.16 | 8.82 | 25.2 |
| Home Depot leaf bag | 5.3 | 17.88 | 71.5 |

As may be seen in the Table, tensile and burst increase with the coating of the control base paper with SEFOSE® and PvOH.

Example 10. Wet/Dry Tensile Strength

3 gram handsheets were made from bleached pulp. The following compares wet and dry tensile strength at different levels of SEFOSE® addition. Note that with these handsheets SEFOSE® was not emulsified into any coating, it was simply mixed into the pulp and drained with no other chemistry added (see Table 8).

Table 8. Wet/Dry Tensile Strength

| SEFOSE® Loading | Wet Strength (lb/$in^2$) | Dry Strength (lb/$in^2$) |
|---|---|---|
| 0% | 0.29 | 9.69 |
| 0.5% | 1.01 | 10.54 |
| 1% | 1.45 | 11.13 |
| 5% | 7.22 | 15.02 |

Note also, that the 5% addition for the wet strength is not far below the dry strength of the control.

Example 11. Use of Esters Containing Less Than 8 Saturated Fatty Acids

A number of experiments were carried out with sucrose esters produced having less than 8 fatty acids attached to the sucrose moiety. Samples of SP50, SP10, SP01 and F20W (from Sisterna, The Netherlands) which contain 50, 10, 1 and essentially 0% monoesters, respectively. While these commercially available products are made by reacting sucrose with saturated fatty acids, thus relegating them less useful for further crosslinking or similar chemistries, they have been useful in examining emulsification and water repelling properties.

For example, 10g of SP01 was mixed with 10g of glyoxal in a 10% cooked PvOH solution. The mixture was "cooked" at 200°F for 5 mins and applied via drawdown to a porous base paper made from bleached hardwood kraft. The result was a crosslinked waxy coating on the surface of the paper that exhibited good hydrophobicity. Where a minimum of 3g/$m^2$ was applied, the resulting contact angle was greater than 100°. Since the glyoxal is a well-known crystallizer used on

compounds having OH groups, this method is a potential means to affix fairly unreactive sucrose esters to a surface by bonding leftover alcohol groups on the sucrose ring with an alcohol group made available in the substrate or other coating materials.

Example 12. HST Data and Moisture Uptake

To demonstrate that SEFOSE® alone provides the water proofing properties observed, porous Twins River (Matawaska, ME) base paper was treated with various amounts of SEFOSE (and PvOH or Ethylex 2025 to emulsify, applied by drawdown) and assayed by Hercules Size Test. The results are shown in Table 9.

Table 9. HST Data with SEFOSE®.

| HST-seconds | SEFOSE® pickup g/m$^2$ | Emulsifier g/m$^2$ |
|---|---|---|
| <1 | - | - |
| 2.7 | 0g/m$^2$ | 2.7g/m$^2$ PvOH |
| 16.8 | 0g/m$^2$ | 4.5g/m$^2$ Ethylex 2025 |
| 65 | 2.2g/m$^2$ | 2.3g/m$^2$ Ethylex 2025 |
| 389.7 | 1.6g/m$^2$ | 1.6g/m$^2$ PvOH |
| 533 | 3.0g/m$^2$ | 4.0g/m$^2$ PvOH |
| 1480 | 5.0g/m$^2$ | 5.0g/m$^2$ Ethylex 2025 |
| 2300+ | 5.0g/m$^2$ | 5.0g/m$^2$ PvOH |

As can be seen in Table 9, increased SEFOSE® applied to the surface of the paper lead to increased water resistance (as shown by increased HST in seconds).

This may also be seen using coatings of a saturated sucrose ester product. For this particular example, the product, F20W (available from Sisterna, The Netherlands) is described as a very low% monoester with most molecules in the 4-8 substitution range. Note that the F20W product pickup is only 50% of the total coating, as it was emulsified with PvOH using equal parts of each to make a stable emulsion. So, where the pickup is labeled "0.5 g/m$^2$" there is also the same pickup of PvOH giving a total pickup of 1.0 g/m$^2$. Results are shown in Table 10.

Table 10. HST Data F20W.

| HST-Seconds | Sisterna F20W pickup |
|---|---|
| <1 | 0 |
| 2.0 | 0.5g/m$^2$ |
| 17.8 | 1.7g/m$^2$ |
| 175.3 | 2.2g/m$^2$ |
| 438.8 | 3.5g/m$^2$ |
| 2412 | 4.1g/m$^2$ |

As can be seen from Table 10, again, increase F20W increases the water resistance of the porous sheet. Thus, the applied sucrose fatty acid ester itself is making the paper water resistance.

That the water resistance is not simply due to the presence of a fatty acid forming an ester bond with the cellulose, softwood handsheets (bleached softwood kraft) were loaded with SEFOSE® and oleic acid was directly added to the pulp, where the oleic acid forms an ester bond with the cellulose in the pulp. The mass at time zero represents the "bone dry" mass of the handsheets taken out of the oven at 105°C. The samples were placed in a controlled humidity room maintained at 50% RH. The change in mass is noted over time (in minutes). The results are shown in Tables 11 and 12.

Table 11. Moisture Uptake SEFOSE®.

| Time (Min) | 2% SEFOSE® | 30% SEFOSE® | Control |
|---|---|---|---|
| 0 | 3.859 | 4.099 | 3.877 |

(continued)

| Time (Min) | 2% SEFOSE® | 30% SEFOSE® | Control |
|---|---|---|---|
| 1 | 3.896 | 4.128 | 3.911 |
| 3 | 3.912 | 4.169 | 3.95 |
| 5 | 3.961 | 4.195 | 3.978 |
| 10 | 4.01 | 4.256 | 4.032 |
| 15 | 4.039 | 4.276 | 4.054 |
| 30 | 4.06 | 4.316 | 4.092 |
| 60 | 4.068 | 4.334 | 4.102 |
| 180 | 4.069 | 4.336 | 4.115 |

Table 12. Moisture Uptake Oleic Acid.

| Time (hrs) | 30% Oleic Acid | 50% Oleic Acid | Control |
|---|---|---|---|
| 0 | 4.018 | 4.014 | 4.356 |
| 0.5 | 4.067 | 4.052 | 4.48 |
| 2 | 4.117 | 4.077 | 4.609 |
| 3 | 4.128 | 4.08 | 4.631 |
| 5 | 4.136 | 4.081 | 4.647 |
| 21 | 4.142 | 4.083 | 4.661 |

Note the difference here where oleic acid is directly added to the pulp forming an ester bond greatly slows moisture uptake. In contrast, only 2% SEFOSE® slows moisture uptake, at higher concentrations, SEFOSE® does not. As such, while not being bound by theory, the structure of the SEFOSE® bound material cannot be simply explained by the structure formed by simple fatty acid esters and cellulose.

Example 13. Saturated SFAEs

The saturated class of esters are waxy solids at room temperature which, due to saturation, are less reactive with the sample matrix or itself. Using elevated temperatures (e.g., at least 40°C and for all the ones tested above 65°C) these materials melt and may be applied as a liquid which then cools and solidifies forming a hydrophobic coating. Alternatively, these materials may be emulsified in solid form and applied as an aqueous coating to impart hydrophobic characteristics.

The data shown here represent HST (Hercules Size test) readings obtained from papers coated with varying quantities of saturated SFAEs.

A #45, bleached, hardwood kraft sheet obtained from Turner Falls paper was used for test coatings. The Gurley porosity measured approximately 300 seconds, representing a fairly tight base sheet. S-370 obtained from Mitsubishi Foods (Japan) was emulsified with Xanthan Gum (up to 1% of the mass of saturated SFAE formulation) before coating.

Coat weight of saturated SFAE formulation (pounds per ton) HST (average of 4 measurements per sample).

Table 13

| Coat weight of S-370 (pounds per ton) | HST (average of 4 measurements per sample) |
|---|---|
| Control only #0 | 4 seconds |
| #45 | 140 seconds |
| #65 | 385 seconds |
| #100 | 839 seconds |
| #150 | 1044 seconds |
| #200 | 1209 seconds |

Lab data generated also supports that limited amounts of saturated SFAE may enhance water resistance of coatings that are designed for other purposes/applications. For example, saturated SFAE was blended with Ethylex starch and polyvinyl alcohol based coatings and increased water resistance was observed in each case.

The examples below were coated on a #50, bleached recycled base with a Gurley porosity of 18 seconds.

100 grams of Ethylex 2025 were cooked at 10% solids (1 liter volume) and 10 grams of S-370 were added in hot and mixed using a Silverson homogenizer. The resulting coating was applied using a common benchtop drawdown device and the papers were dried under heat lamps.

At 300#/ton coat weight, the starch alone had an average HST of 480 seconds. With the same coat weight of the starch and saturated SFAE mixture, the HST increased to 710 seconds.

Enough polyvinyl alcohol (Selvol 205S) was dissolved in hot water to achieve a 10% solution. This solution was coated on the same #50 paper described above and had an average HST of 225 at 150 pounds/ton of coat weight. Using this same solution, S-370 was added to achieve a mixture in which contained 90% PVOH /10% S-370 on a dry basis (i.e., 90 ml water, 9 grams PvOH, 1gram S-370): average HST increased to 380 seconds.

Saturated SFAEs are compatible with prolamines (specifically, zein; see U.S. Pat. No. 7,737,200). Since one of the major barriers to commercial production of the subject matter of said patent is that the formulation be water soluble: the addition of saturated SFAEs assists in this manner.

Example 14. Other Saturated SFAEs

Size press evaluations of saturated SFAE based coatings were done on a bleached lightweight sheet (approx. 35 #) that had no sizing and relatively poor formation. All evaluations were done using Exceval HR 3010 PvOH cooked to emulsify the saturated SFAE. Enough saturated SFAE was added to account for 20% of the total solids. The focus was on evaluating the S-370 vs the C-1800 samples (available from Mitsubishi Foods, Japan). Both of these esters performed better than the control, some of the key data are shown in Table 14:

Table 14

| | Average HST | Kit Value |
|---|---|---|
| 10% polyvinyl alcohol alone | 38 sec. | 2 |
| PVOH with S-370 | 85 sec. | 3 |
| PVOH with C-1800 | 82 sec. | 5 |

Note that the saturated compounds appear to give an increase in kit, with both the S-370 and the C-1800 yielding a ~100% increase in HST.

Example 15. Wet Strength Additive

Laboratory testing has shown that the chemistry of the sucrose esters can be tuned to achieve a variety of properties, including use as a wet strength additive. When the sucrose esters are made by attaching saturated groups to each alcohol functionality on the sucrose (or other polyol), the result is a hydrophobic, waxy substance having low miscibility/solubility in water. These compounds may be added to cellulosic materials to impart water resistance either internally or as a coating, however; since they are not chemically reacted to each other or any part of the sample matrix they are susceptible to removal by solvents, heat and pressure.

Where waterproofing and higher levels of water resistance are desired, sucrose esters containing unsaturated functional groups may be made and added to the cellulosic material with the goal of achieving oxidation and/or crosslinking which helps fix the sucrose ester in the matrix and render it highly resistant to removal by physical means. By tuning the number of unsaturated groups as well as the size of the sucrose esters, a means is obtained for crosslinking to impart strength, yet with a molecule that is not optimal for imparting water resistance.

The data shown here is taken by adding SEFOSE® to a bleached kraft sheet at varying levels and obtaining wet tensile data. The percentages shown in the table represent the percent sucrose ester of the treated 70# bleached paper (see Table 15).

Table 15

| % SEFOSE® | Load | Strain/Modulus |
|---|---|---|
| 0% | 4.98 | 0.93/89.04 |

(continued)

| % SEFOSE® | Load | Strain/Modulus |
|---|---|---|
| 1% | 5.12 | 1.88/150.22 |
| 5% | 8.70 | 0.99/345.93 |
| 10% | 10.54 | 1.25/356.99 |
| Dry/untreated | 22.67 | |

The data illustrate a trend in that adding unsaturated sucrose esters to papers increases the wet strength as loading level increases. The dry tensile shows the maximum strength of the sheet as a point of reference.

Example 16. Method of producing sucrose esters using acid chlorides.

In addition to making hydrophobic sucrose esters via transesterification, similar hydrophobic properties can be achieved in fibrous articles by directly reacting acid chlorides with polyols containing analogous ring structures to sucrose.

For example, 200 grams of palmitoyl chloride (CAS 112-67-4) were mixed with 50 grams of sucrose and mixed at room temperature. After mixing the mixture was brought to 100°F and maintained at that temperature overnight (ambient pressure). The resulting material was washed with acetone and deionized water to remove any unreacted or hydrophilic materials. Analysis of remaining material using C-13 NMR showed a significant quantity of hydrophobic sucrose ester had been made.

While it has been shown (by BT3 and others) that the addition of fatty acid chlorides to cellulosic materials could impart hydrophobic properties, the reaction itself is undesirable on site as the by-product given off, gaseous HCl, creates a number of problems including corrosion of surrounding materials and is hazardous to workers and surrounding environment. One additional problem created by the productions of hydrochloric acid is that as more is formed, i.e., more polyol sites are reacted, the weaker the fibrous composition becomes. Palmitoyl chloride was reacted in increasing amounts with cellulose and cotton materials and as hydrophobicity increased, strength of the article decreased.

The reaction above was repeated several times using 200 grams of R-CO-chloride reacted with 50 grams each of other similar polyols, including corn starch, xylan from birch, carboxymethylcellulose, glucose and extracted hemicelluloses.

Example 17. Peel Test

Peel test utilizes a wheel between the two jaws of the tensile tester to measure force needed to peel tape off from a papers surface as a reproducible angle (ASTM D1876; e.g., 100 Series Modular Peel Tester, TestResources, Shakopee, MN).

For this work, bleached kraft paper with high Gurley (600 seconds) from Turner Falls paper (Turner's Falls, MA) was used. This #50 pound sheet represents a fairly tight, but quite absorbant sheet.

When the #50 pound paper was coated with 15% Ethylex starch as a control, the average force (over 5 samples) that was needed was 0.55 pound/inch. When treated with the same coating but with SEFOSE® substituted for 25% of the Ethylex starch (so 25% pickup is SEFOSE®, 75% is still Ethylex) the average force decreased to 0.081 pounds/inch. With a 50% substitution of SEFOSE® for the Ethylex, the force needed decreased to less than 0.03 pounds per inch.

The preparation of this paper is in accord with TAPPI standard method 404 for determining tensile strength of papers.

Finally, the same paper was used with S-370 at a loading rate of 750 pounds per ton - which effectively fills all the pours in the sheet creating a complete physical barrier. This indeed passes a TAPPI kit 12 on the flat. This brief experiment shows that it is possible to get grease resistance using saturated SFAE varieties.

Example 18 Saturated SFAE and Inorganic Particles (Fillers)

Saturated sucrose fatty acid esters range from hydrophilic to hydrophobic depending on the number of fatty acid chains (and the chain length) attached to the sucrose molecule. These are not considered to be highly reactive compounds.

A range of substituted SAFE has been investigated, side chains being 16 or 18 carbons in length. The examined materials are waxy solids with melting point below 150° C. When coated on paper the highly substituted esters impart significant levels of water resistance depending on coat weight and sheet porosity. Finally, the same paper was used with S-370 at a loading rate of 750 pounds per ton - which effectively fills all the pours in the sheet creating a complete physical

barrier. The paper treated so was found to possess a TAPPI kit 12. This brief experiment shows that it is possible to get grease resistance using saturated SFAE varieties.

Observations:

More hydrophobic esters tend to aggregate in aqueous emulsions/dispersions and so uniform coatings on the paper become challenging.

The low melting point of a number of these molecules results on the coating "melting" into the sheet.

If hydrophobic SAFE are mixed with polymers to help stabilize the dispersion, these polymers (i.e., latex, starch, polyvinyl alcohol) tend to surround these esters in a way that mutes the desired hydrophobic properties.

When mixed with calcium carbonate (e.g., precipitated calcium carbonate) there is an attraction which is unexpected. The SAFE does not melt into the paper under the same drying conditions.

Calcium carbonate appears to aid in dispersion of the SAFE and adherence is such that the SAFE acts as a binder to attach the calcium carbonate particles to the surface of coated papers. It is thought that this uniform dispersion results in enhanced water resistance for a given amount of ester.

Example 18. Pigmented Coating Formulations

Methods

Analysis of SEFOSE® with a number of MALLARD CREEK samples (TYKOTE® 1019, 1004, 6160, 1005, 6152) as well as DOW 620® and some BASF samples **(Epotal NX 4430, Epotal s440)** appear to support that latexes are compatible with SEFOSE® from a chemistry standpoint. The order of addition does not appear to matter and the viscosity does not seem to change appreciably.

Cup Paper Stock

MALLARD CREEK TYKOTE® 1019 was blended with IMERYS LX® clay slurry. SEFOSE® was blended into this mixture with the resulting ratio being latex: 70%, LX® clay: 20%, SEFOSE®: 10% (top coat) or 75%, GCC: 75%; SEFOSE®: 3%; TYKOTE® 1019: 21.5% (base coat). The base coat blend had a pH of about 7.6, viscosity of 215cps, and 60-70% solids. The top coat had a pH of 7.8 about 57% solids, viscosity of about 240 cps. Reported coat weight was around 8 $g/m^2$ as applied via blade to the pre-coated board. Rolls of hot cup stock, cold cup stock and cup bottom stock were made with 2 different coatings.

Table 16 shows the effect of the SEFOSE® curing in a pigmented coating formulation on Cobb values.

Table 16. Curing time vs. Cobb value

| Curing Time at 90°C | Cobb Value (30 Minutes) |
|---|---|
| 0 minutes | 39 |
| 30 minutes | 26 |
| 1 hour | 21 |
| 3 hours | 15 |
| 6 hours | 7 |
| 12 hours | 3 |

As can be seen from the table, latex coated board, having a Cobb value of 39 saw that number reduced to 3 with the addition of SEFOSE® (10% by weight) to the coating.

SEFOSE® does not seem to be as an effective film former as Latex, and so, not to be bound by theory, it was hypothesized that the latex forms a barrier film and the SEFOSE® acts synergistically by adding hydrophobicity to any voids/pin holes in the latex film.

Plastic Substrate

In order to further understand the Cobb effect, plastic substrate was coated with DOW 620® latex, dried (on the plastic substrate) and Cobb was measured (Cobb Value = 10.5). This data point reflects the fact that Cobb readings are

influenced not only by water penetrating the paper itself, but also reflects that water is soaking or absorbing into the coating itself. When this experiment was repeated with 10% SEFOSE® added to the latex (again coated on a plastic substrate) the Cobb value dropped to 3.8, reflecting hydrophobicity in the film itself.

Example 19. SFAE Encapsulation of Solid Latex Polymer Bead and Addition to Cellulose Fibers

SFAE is mixed with latex in aqueous propylene glycol by a temperature cycle method comprising heating to 90°C for 20 min, cooling to 21°C for 1 minute, heating again at 90°C for an additional 5 min, and cooling to 21°C. The SFAE may be kneaded together with the latex.

The particles are dispersed into an aqueous emulsion or slurry and the aqueous emulsion or slurry is then mixed with the cellulose fiber slurry at a concentration of about 5% to about 50% of the total dry weight, prior to wet forming. The emulsion may be kneaded with the fiber slurry. The fiber slurry is then applied to a machine comprising a mesh or screen to remove water, with optional heating. The resulting fiber material is then applied to a mold and heated until dry. Once dried, the resulting product is removed from the mold.

## Claims

**1.** A method of producing a molded cellulose-containing article comprising:

adding an emulsion or slurry to a cellulose fiber furnish, wherein said emulsion or slurry comprises one or more sucrose fatty acid esters and one or more carrier particles;
draining the furnish through one or more meshes or screens;
thermal forming the mixture into a product in a mold; and
stripping the product from the mold,
wherein a carrier of the one or more carrier particles comprises an uncooked starch, preferably an uncooked starch particle,
wherein said aqueous emulsion or slurry is mixed with the cellulose fiber slurry at a concentration of between about 5% to about 50% of the total dry weight, prior to wet forming, and
wherein said product exhibits water, oil, and/or grease resistance compared to a cellulose product not treated with said emulsion or slurry.

**2.** The method of claim 1, wherein the carrier of the one or more carrier particles comprises an uncooked corn starch, rice starch, wheat starch, potato starch, tapioca starch granule, or a combination thereof; preferably an uncooked starch particle, more preferably an uncooked corn starch particle.

**3.** The method of claim 1, wherein the product is a bowl, plate, a bottle, a pouch, a packaging container or insert.

**4.** The method of claim 1, wherein a further carrier of the one or more carrier particles is selected from the group consisting of a sucrose fatty acid ester, a polymer, a solid latex polymer bead, a hollow polymer shell, a resin bead, a pigment particle, and combinations thereof.

**5.** The method of claim 4, wherein the pigment particle is selected from the group consisting of calcium carbonate, titanium dioxide, kaolin clay, silica, silicate, talc, mica, and combinations thereof.

**6.** The method of claim 1, wherein the particles further comprise uncooked corn starch, rice starch, wheat starch, potato starch, or tapioca starch granule, oat hull, rice hull, ground nut shell, or combination thereof.

**7.** The method of claim 1, wherein said particles are coated with one or more sucrose esters and dispersed into an aqueous emulsion or slurry.

**8.** The method of claim 1 and 7, wherein said aqueous emulsion or slurry is mixed with the cellulose fiber slurry at a concentration of between about 5% to about 50% of the total dry weight, prior to wet forming, preferably at a concentration of between 5% and 40% of the total dry weight, prior to wet forming, and more preferably at a concentration of between about 5 % and 40% of the total dry weight, prior to wet forming.

**9.** The method of claim 1, wherein the carrier is a polymer, and wherein the polymer exhibits a low glass transition temperature.

**10.** The method of claim 9, wherein the polymer is latex.

**11.** The method of claim 1, wherein the uncooked starch is uncooked corn starch.

**12.** The method of claim 1, wherein the product exhibits reduced stickiness.

**13.** A composition, preferably suitable for use in a method of any one of claims 1 to 12, wherein the composition comprises sucrose fatty acid ester particles containing one or more cargo materials, wherein a cargo material of the one or more cargo materials comprises a latex.

**14.** The composition of claim 13, wherein the latex comprises a solid latex polymer bead.

**15.** The composition of claim 13, wherein said one or more cargo materials further comprises a cargo material selected from the group consisting of a polymer, a resin bead, calcium carbonate, titanium dioxide, kaolin clay, silica, silicate, talc, mica and combinations thereof.

**16.** The composition of claim 13, further comprising thymol, lecithin, alkyl glucosides and combinations thereof.

**17.** The composition of claim 13, wherein the particles are micelles, microcapsules or nanocapsules.

**18.** The composition of claim 13, wherein the sucrose fatty acid ester is a mono- or diester.

**19.** The composition of claim 13, wherein the sucrose fatty acid ester comprises all saturated fatty acids or is a mixture of saturated and unsaturated fatty acids.

**20.** The composition of claim 13, wherein the fatty acid ester particles comprise one or more sucrose fatty acid esters.

**21.** An emulsion, preferably suitable for use in a method of any one of claims 1 to 12, comprising the composition of any one of claims 13 to 20.

**22.** An article of manufacture produced by the method of any one of claims 1 to 12.

**Patentansprüche**

**1.** Verfahren zum Herstellen eines geformten cellulosehaltigen Gegenstands umfassend:

Hinzufügen einer Emulsion oder Aufschlämmung zu einem Cellulosefaserstoff, wobei die Emulsion oder Aufschlämmung einen oder mehrere Saccharosefettsäureester und ein oder mehrere Trägerpartikel umfasst;
Durchfließenlassen des Stoffes durch ein(en) oder mehrere Gitter oder Siebe;
thermisches Formen der Mischung zu einem Produkt in einer Form; und
Entformen des Produkts,
wobei ein Träger des einen oder der mehreren Trägerpartikel eine ungekochte Stärke, bevorzugterweise ein ungekochtes Stärkepartikel umfasst;
wobei die wässrige Emulsion oder Aufschlämmung mit der Cellulosefaseraufschlämmung mit einer Konzentration zwischen etwa 5 % und etwa 50 % des Gesamttrockengewichtes, vor dem Nassformen, gemischt wird, und wobei das Produkt im Vergleich zu einem Celluloseprodukt, das nicht mit der Emulsion oder Aufschlämmung behandelt wurde, eine Beständigkeit gegen Wasser, Öl und/oder Fett aufweist.

**2.** Verfahren nach Anspruch 1, wobei der Träger des einen oder der mehreren Trägerpartikel ungekochte Maisstärke, Reisstärke, Weizenstärke, Kartoffelstärke, Tapiokastärkegranulat oder eine Kombination davon, bevorzugterweise ein ungekochtes Stärkepartikel, bevorzugtererweise ein ungekochtes Maisstärkepartikel umfasst.

**3.** Verfahren nach Anspruch 1, wobei das Produkt eine Schüssel, ein Teller, eine Flasche, ein Beutel, ein Verpackungsbehälter oder ein Einsatz ist.

**4.** Verfahren nach Anspruch 1, wobei ein weiterer Träger des einen oder der mehreren Trägerpartikel ausgewählt ist aus der Gruppe bestehend aus einem Saccharosefettsäureester, einem Polymer, einem festen Latexpolymerkügelchen,

einer hohlen Polymerschale, einem Harzkügelchen, einem Pigmentpartikel und Kombinationen davon.

5. Verfahren nach Anspruch 4, wobei das Pigmentpartikel ausgewählt ist aus der Gruppe bestehend aus Calciumcarbonat, Titandioxid, Kaolinton, Siliciumdioxid, Silicat, Talk, Glimmer und Kombinationen davon.

6. Verfahren nach Anspruch 1, wobei die Partikel weiter umfassen ungekochte Maisstärke, Reisstärke, Weizenstärke, Kartoffelstärke oder Tapiokastärkegranluat, Haferspelze, Reisspelze, gemahlene Nussschale oder Kombinationen davon.

7. Verfahren nach Anspruch 1, wobei die Partikel mit einem oder mehreren Saccharoseestern beschichtet und zu einer wässrigen Emulsion oder Aufschlämmung dispergiert werden.

8. Verfahren nach Anspruch 1 und 7, wobei die wässrige Emulsion oder Aufschlämmung mit der Cellulosefaseraufschlämmung mit einer Konzentration zwischen etwa 5 % und 50 % des Gesamttrockengewichtes, vor dem Nassformen, gemischt wird, bevorzugterweise mit einer Konzentration zwischen 5% und 40 % des Gesamttrockengewichtes, vor dem Nassformen, und bevorzugtererweise mit einer Konzentration zwischen etwa 5 % und 40 % des Gesamttrockengewichtes, vor dem Nassformen.

9. Verfahren nach Anspruch 1, wobei der Träger ein Polymer ist und wobei das Polymer eine niedrige Glasübergangstemperatur aufweist.

10. Verfahren nach Anspruch 9, wobei das Polymer Latex ist.

11. Verfahren nach Anspruch 1, wobei die ungekochte Stärke ungekochte Maisstärke ist.

12. Verfahren nach Anspruch 1, wobei das Produkt ein verringertes Haftvermögen aufweist.

13. Zusammensetzung, bevorzugterweise geeignet für die Verwendung in einem Verfahren nach einem der Ansprüche 1 bis 12, wobei die Zusammensetzung Saccharosefettsäureesterpartikel umfasst, die ein oder mehrere Beladungsmaterialien enthalten, wobei ein Beladungsmaterial des einen oder der mehreren Beladungsmaterialien einen Latex umfasst.

14. Zusammensetzung nach Anspruch 13, wobei der Latex ein festes Latexpolymerkügelchen umfasst.

15. Zusammensetzung nach Anspruch 13, wobei das eine oder die mehreren Beladungsmaterialien weiter ein Beladungsmaterial umfassen, das ausgewählt ist aus der Gruppe bestehend aus einem Polymer, einem Harzkügelchen, Calciumcarbonat, Titandioxid, Kaolinton, Siliciumdioxid, Silicat, Talk, Glimmer und Kombinationen davon-

16. Zusammensetzung nach Anspruch 13, weiter umfassend Thymol, Lecithin, Alkylglucoside und Kombinationen davon.

17. Zusammensetzung nach Anspruch 13, wobei die Partikel Micellen, Microkapseln oder Nanokapseln sind.

18. Zusammensetzung nach Anspruch 13, wobei der Saccharosefettsäureester ein Mono- oder Diester ist.

19. Zusammensetzung nach Anspruch 13, wobei der Saccharosefettsäureester vollständig gesättigte Fettsäuren umfasst oder eine Mischung von gesättigten und ungesättigten Fettsäuren ist.

20. Zusammensetzung nach Anspruch 13, wobei die Fettsäureesterpartikel ein oder mehrere Saccharosefettsäureester umfassen.

21. Emulsion, bevorzugterweise geeignet für die Verwendung in einem Verfahren nach einem der Ansprüche 1 bis 12, umfassend die Zusammensetzung nach einem der Ansprüche 13 bis 20.

22. Erzeugnis hergestellt durch das Verfahren nach einem der Ansprüche 1 bis 12.

## Revendications

1. Procédé de production d'un article moulé contenant de la cellulose comprenant :

   l'ajout d'une émulsion ou d'une suspension à une composition de fibres de cellulose, ladite émulsion ou suspension comprenant un ou plusieurs esters d'acide gras de saccharose et une ou plusieurs particules de support ;
   le drainage de la matière première à travers une ou plusieurs mailles ou filtres ;
   le thermoformage du mélange dans un moule afin d'obtenir un produit; et
   le démoulage du produit,
   dans lequel un support d''une ou plusieurs particules de support comprend un amidon non cuit, de préférence une particule d'amidon non cuit,
   dans lequel ladite émulsion ou suspension aqueuse est mélangée à une suspension de fibres de cellulose à une concentration comprise entre environ 5 % et environ 50 % du poids sec total, avant le moulage humide, et
   dans lequel ledit produit présente une résistance à l'eau, à l'huile et/ou à la graisse comparé à un produit en cellulose non traitée avec ladite émulsion ou suspension.

2. Procédé selon la revendication 1, dans lequel le support d'une ou plusieurs particules de support comprend un amidon de maïs non cuit, de l'amidon de riz, de l'amidon de blé, de l'amidon de pomme de terre, des granules d'amidon de tapioca ou un mélange de ceux-ci ; de préférence une particule d'amidon non cuit, plus préférablement une particule d'amidon de maïs non cuit.

3. Procédé selon la revendication 1, dans lequel le produit est un bol, une assiette, une bouteille, une pochette, un récipient d'emballage ou un insert.

4. Procédé selon la revendication 1, dans lequel un support en plus de la ou des particules de support est choisi dans le groupe constitué par un ester d'acide gras de saccharose, un polymère, une bille de polymère de latex solide, une coque de polymère creuse, une bille de résine, une particule de pigment ou un mélange de ceux-ci.

5. Procédé selon la revendication 4, dans lequel la particule de pigment est choisie dans le groupe constitué par le carbonate de calcium, le dioxyde de titane, l'argile kaolinique, la silice, le silicate, le talc, le mica ou un mélange de ceux-ci.

6. Procédé selon la revendication 1, dans lequel les particules comprennent en outre de l'amidon de maïs non cuit, de l'amidon de riz, de l'amidon de blé, de l'amidon de pomme de terre ou de granules d'amidon de tapioca, de la coque d'avoine, de la coque de riz, de la coque d'arachide ou un mélange de ceux-ci.

7. Procédé selon la revendication 1, dans lequel lesdites particules sont enrobées d'un ou plusieurs esters de saccharose et dispersées dans une émulsion ou une suspension aqueuse.

8. Procédé selon la revendication 1 et 7, dans lequel ladite émulsion ou suspension aqueuse est mélangée à la suspension de fibres de cellulose à une concentration comprise entre environ 5 % et environ 50 % du poids sec total, avant le moulage humide, de préférence à une concentration comprise entre 5 % et 40 % du poids sec total, avant le moulage humide, et plus préférablement à une concentration comprise entre environ 5 % et 40 % du poids sec total, avant le moulage humide.

9. Procédé selon la revendication 1, dans lequel le support est un polymère, et dans lequel ledit polymère présente une faible température de transition vitreuse.

10. Procédé selon la revendication 9, dans lequel le polymère est un latex.

11. Procédé selon la revendication 1, dans lequel l'amidon non cuit est de l'amidon de maïs non cuit.

12. Procédé selon la revendication 1, dans lequel le produit présente une adhésivité réduite.

13. Composition, de préférence adaptée à une utilisation dans un procédé selon l'une quelconque des revendications 1 à 12, dans laquelle ladite composition comprend des particules d'ester d'acide gras de saccharose contenant un ou plusieurs matériaux de chargement, dans laquelle l'un ou plusieurs desdits matériaux de chargement comprend un

latex.

14. Composition selon la revendication 13, dans laquelle le latex comprend une bille de polymère de latex solide.

15. Composition selon la revendication 13, dans laquelle ledit ou lesdits matériaux de chargement comprennent en outre un matériau de chargement choisi dans le groupe constitué par un polymère, une bille de résine, du carbonate de calcium, du dioxyde de titane, de l'argile kaolinique, de la silice, du silicate, du talc, du mica et un mélange de ceux-ci.

16. Composition selon la revendication 13, comprenant en outre du thymol, de la lécithine, des alkyle glucosides et un mélanges de ceux-ci.

17. Composition selon la revendication 13, dans laquelle les particules sont des micelles, des microcapsules ou des nanocapsules.

18. Composition selon la revendication 13, dans laquelle l'ester d'acide gras de saccharose est un mono- ou un diester.

19. Composition selon la revendication 13, dans laquelle l'ester d'acide gras de saccharose comprend uniquement des acides gras saturés ou est un mélange d'acides gras saturés et insaturés.

20. Composition selon la revendication 13, dans laquelle les particules d'ester d'acide gras comprennent un ou plusieurs esters d'acide gras de saccharose.

21. Émulsion, de préférence adaptée pour être utilisée dans un procédé selon l'une quelconque des revendications 1 à 12, comprenant la composition selon l'une quelconque des revendications 13 à 20.

22. Article manufacturé produit par le procédé selon l'une quelconque des revendications 1 à 12.

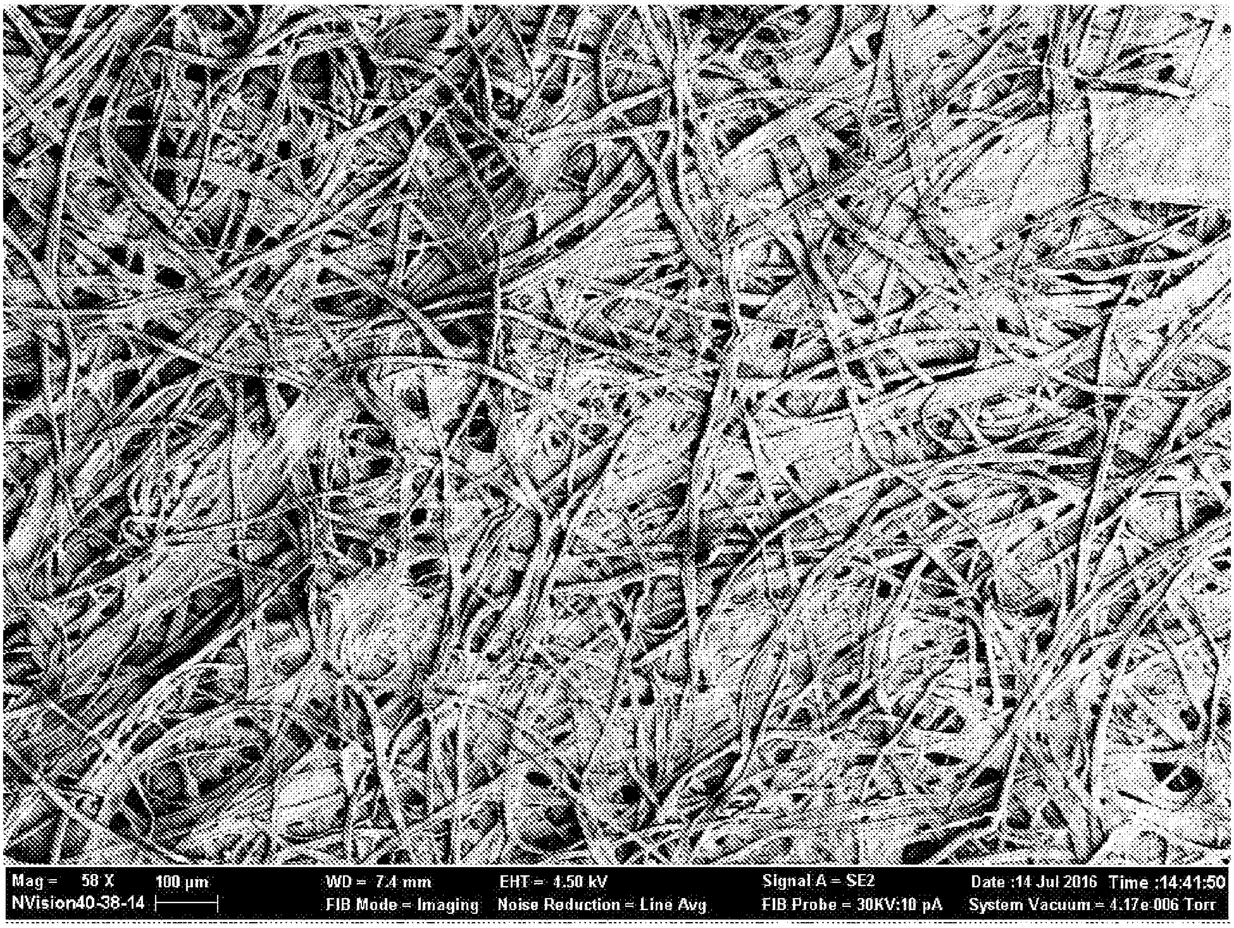
Mag = 58 X
100 µm
NVision40-38-14
WD = 7.4 mm
FIB Mode = Imaging
EHT = 4.50 kV
Noise Reduction = Line Avg
Signal A = SE2
FIB Probe = 30KV:10 pA
Date :14 Jul 2016
Time :14:41:50
System Vacuum = 4.17e-006 Torr

FIG. 1

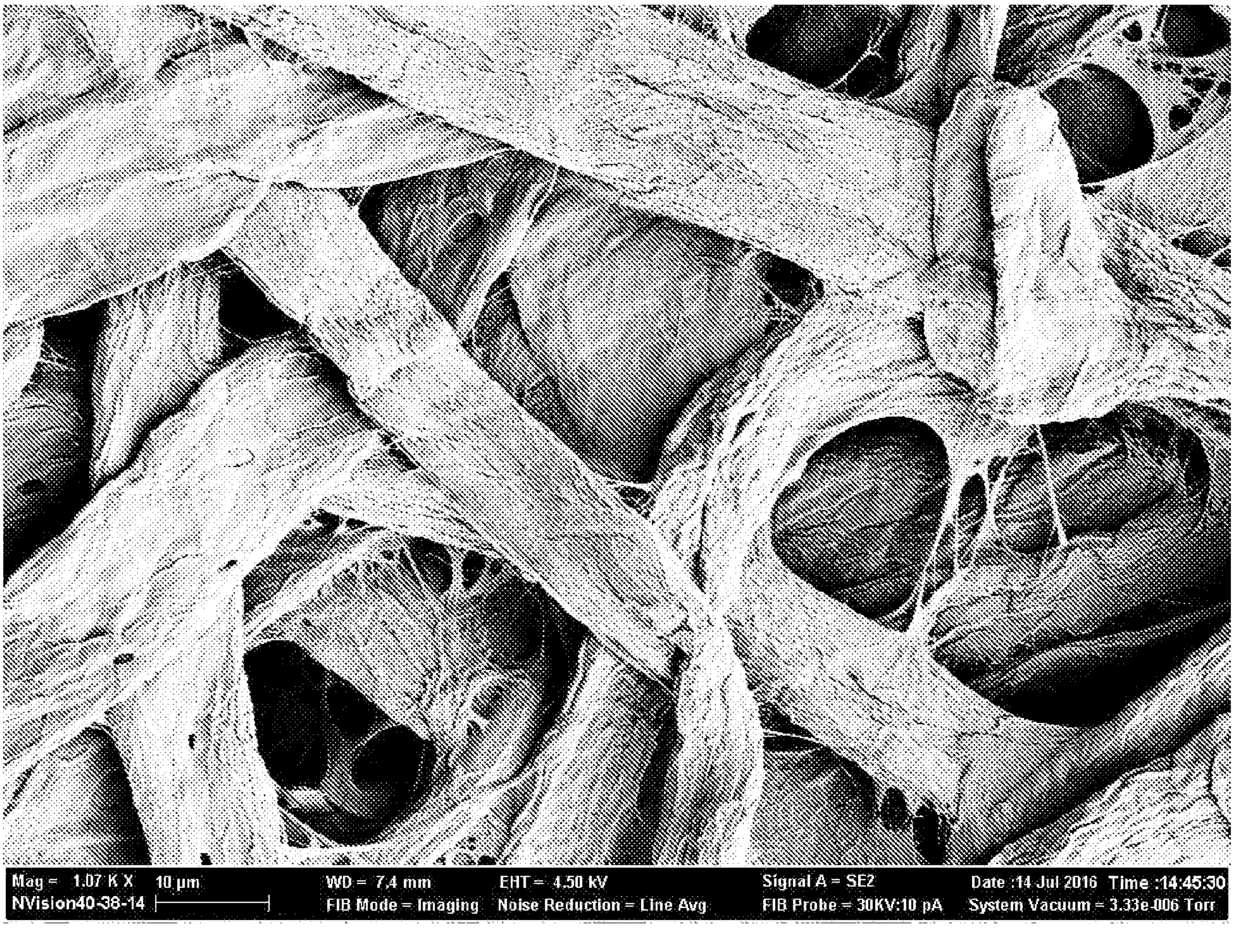
Mag = 1.07 K X
10 µm
NVision40-38-14
WD = 7.4 mm
FIB Mode = Imaging
EHT = 4.50 kV
Noise Reduction = Line Avg
Signal A = SE2
FIB Probe = 30KV:10 pA
Date :14 Jul 2016 Time :14:45:30
System Vacuum = 3.33e-006 Torr

FIG. 2

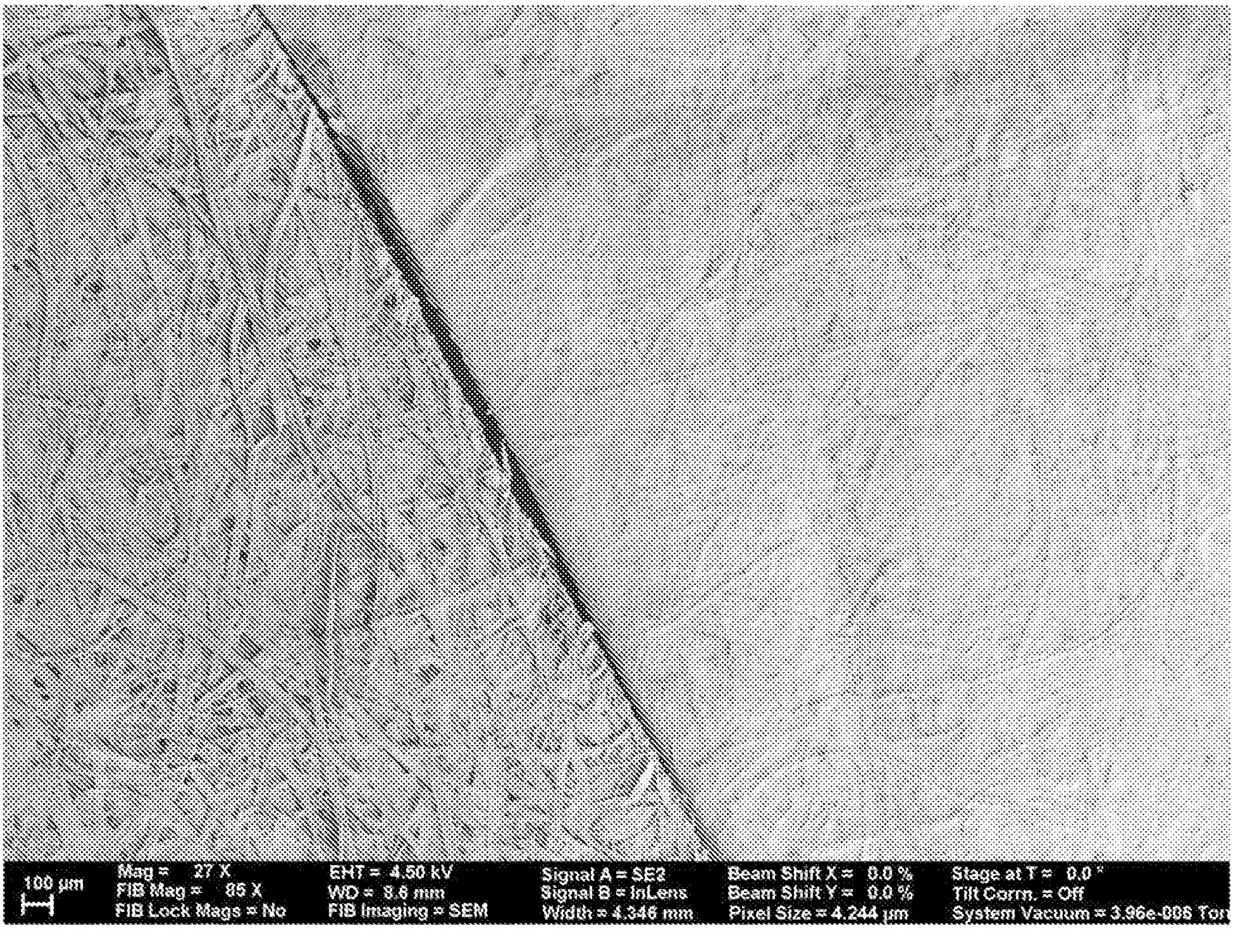
100 µm
Mag = 27 X
FIB Mag = 85 X
FIB Lock Mags = No
EHT = 4.50 kV
WD = 8.6 mm
FIB Imaging = SEM
Signal A = SE2
Signal B = InLens
Width = 4.346 mm
Beam Shift X = 0.0 %
Beam Shift Y = 0.0 %
Pixel Size = 4.244 µm
Stage at T = 0.0 °
Tilt Corrn. = Off
System Vacuum = 3.96e-006 Torr

FIG. 3

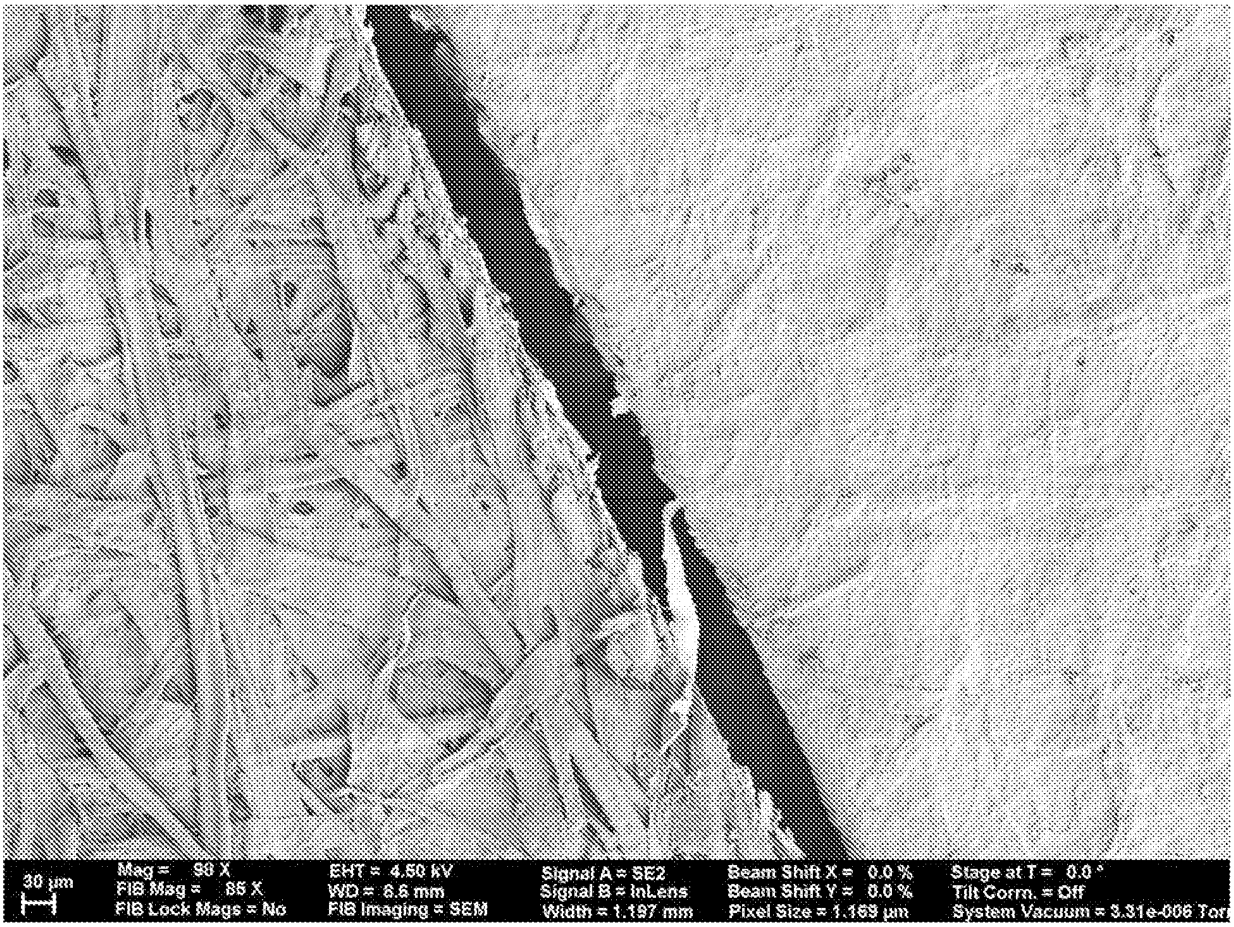
30 µm
Mag = 98 X
FIB Mag = 85 X
FIB Lock Mags = No
EHT = 4.50 kV
WD = 6.6 mm
FIB Imaging = SEM
Signal A = SE2
Signal B = InLens
Width = 1.197 mm
Beam Shift X = 0.0 %
Beam Shift Y = 0.0 %
Pixel Size = 1.169 µm
Stage at T = 0.0 °
Tilt Corrn. = Off
System Vacuum = 3.31e-006 Torr

FIG. 4

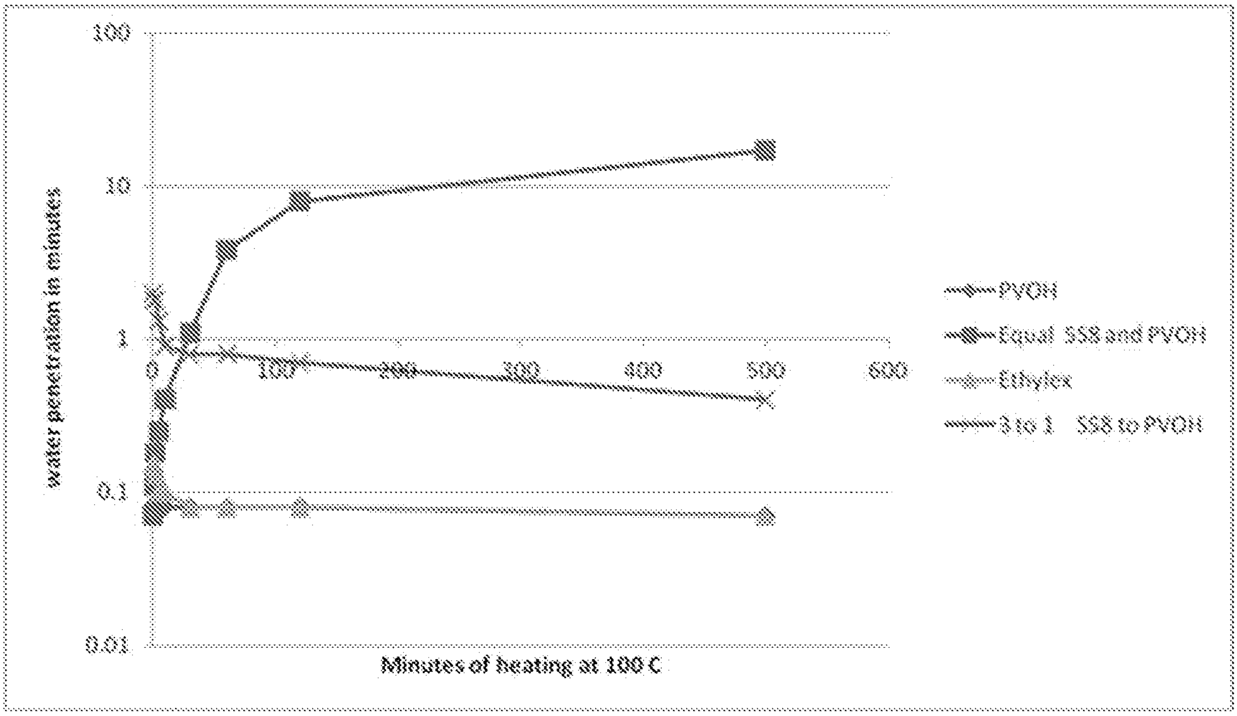
100
10
1
0.1
0.01
0
100
200
300
400
500
600
water penetration in minutes
Minutes of heating at 100 C
PVOH
Equal SS8 and PVOH
Ethylex
3 to 1 SS8 to PVOH

FIG. 5

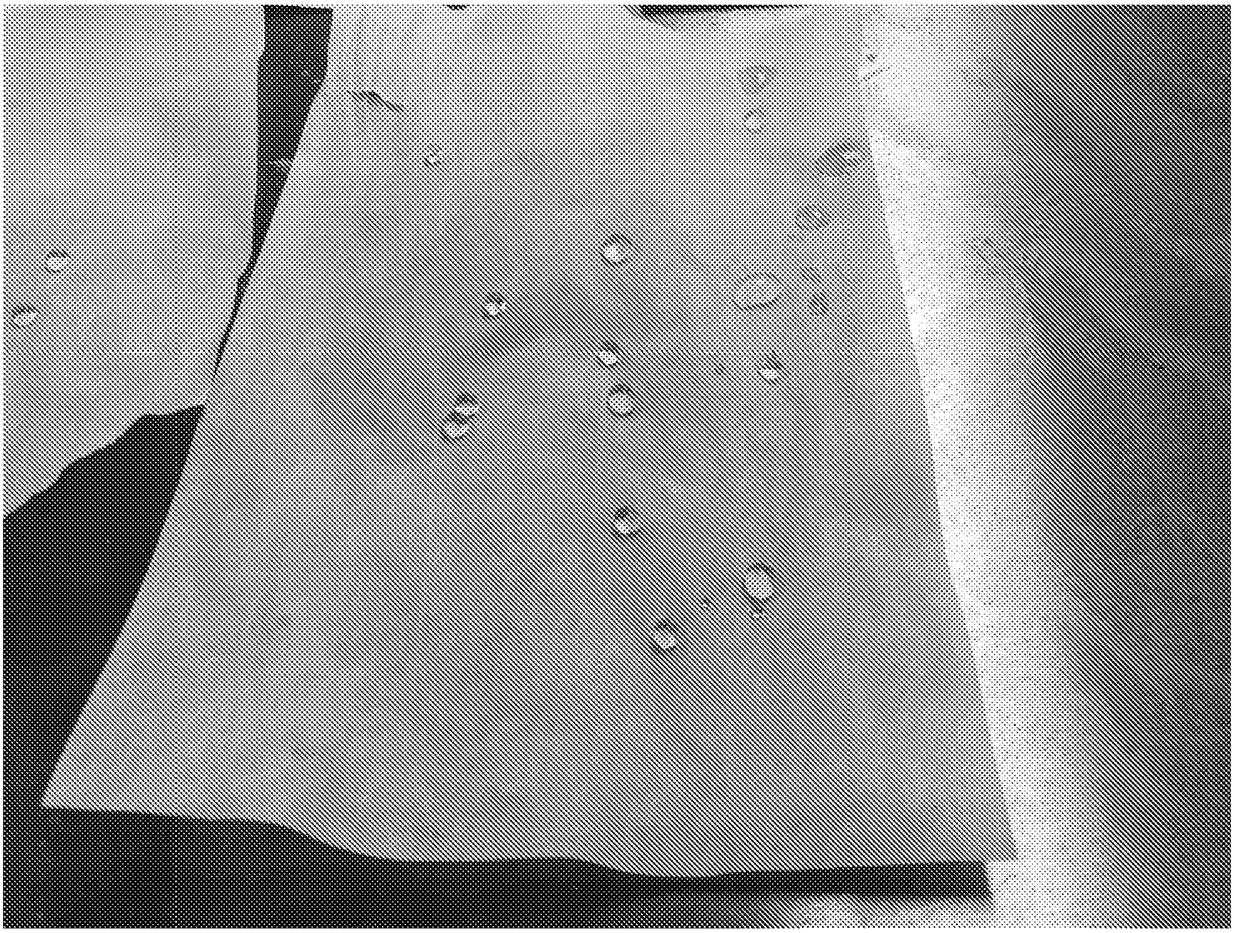

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- TW 500746
- US 20050211405 A
- WO 2012130611 A1
- EP 3385306 A1
- US 3963699 A
- US 4517360 A
- US 4518772 A
- US 4611055 A
- US 5767257 A
- US 6504003 B
- US 6121440 A
- US 6995232 B
- WO 1992004361 A1
- WO 6995232 A
- US 20150167243 A
- US 4374702 A
- US 20090221812 A
- US 7737200 B


### Non-patent literature cited in the description


- Merck Index
- Surface Treatments. **SMOOK, G.** Handbook for Pulp & Paper Technologists. TAPPI Press, 2016, 293-309
- *CHEMICAL ABSTRACTS*, 112-67-4